# EUROPEAN PATENT SPECIFICATION

(11) **EP 1 111 892 B1**
(45) Date of publication and mention of the grant of the patent: **24.10.2007**
(21) Application number: 00311068.1
(22) Date of filing: 12.12.2000
(51) Int. Cl.: H04M 7/00, H04L 29/06, H04M 3/22

(54) **Methods and systems for internet protocol (IP) network surveillance**
Verfahren und Vorrichtungen zur Überwachung eines Internetprotokollnetzwerkes
Procédés et systèmes de surveillance d'un réseau à protocole Internet

(30) Priority: 23.12.1999 US 472377
(43) Date of publication of application: 27.06.2001
(73) Proprietor: Nortel Networks Limited, St Laurent, Québec H4S 2A9 (CA)
(72) Inventor: Fortman, Peter A., Raleigh, North Carolina 27613 (US)
(74) Representative: Mackenzie, Andrew Bryan

(56) References cited:
- WO-A-99/43137
- WO-A-99/55062
- US-A- 5 978 450

## Description

### Technical Field

The present invention relates generally to methods and systems for internet protocol (IP) network surveillance. More particularly, the present invention relates to methods and systems for performing surveillance of IP communications, such as voice telephone calls, data communications, audio communications, and video communications.

### Related Art

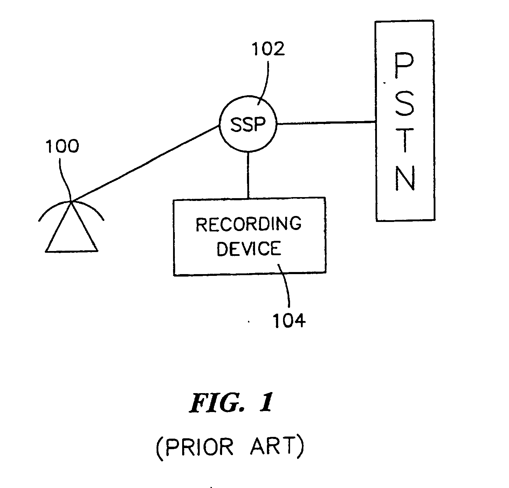

In the public switched telephone network (PSTN), telephone calls to and from the subject of a court-ordered wiretap can be recorded easily at the end office serving the subject. For example, referring to Figure 1, all calls to or from end user device **100** pass through service switching point (SSP) **102** connected to end user device **100**. More particularly, call signaling information used to set up and tear down a call involving end user device **100** passes through SSP **102**. In addition, once a call is set up between the user of device **100** and another end user, the media stream, i.e., the voice, data, video, or any combination thereof, passes through SSP **102**. Accordingly, in order to record call signaling and media stream information directed to or transmitted from end user device **100**, a recording device **104**, such as a magnetic tape recorder, is placed at SSP **102** to record call signaling and media stream information associated with end user device **100**. Thus, in the conventional PSTN network, because all calls to or from an end user device pass through a single point, recording the information is relatively easy.

In a packet-based network, such as an Internet protocol (IP) network, there might not be an end office through which all call signaling and media stream information is guaranteed to pass. Thus, there is currently no way of reliably capturing the call signaling and media exchange of a subject under surveillance. Given the increase in IP telephony services offered by service providers, service providers might in the future be legally required to provide a reliable method for performing IP surveillance.

Currently, service providers providing IP services are classified as enhanced service providers rather than communications providers. Enhanced service providers are exempt from many taxes, tariffs, and other laws that affect communications service providers. Enhanced service providers, such as America Online, have complied with FBI requests for user information relating to monitoring e-mail of a subscriber. In light of the increase in IP users, a formal wire tapping capability for packet-based networks is likely to be imposed on IP service providers in the near future.

One problem with collecting call signaling and media stream information in the IP domain is that the monitoring can be detectable by the end user. This may be useful, for example in the application of the subject matter of international Application No. WO99/43137 where agent stations in a call centre are interconnected to a LAN, such that a supervisor at one station may monitor telephone conversations at another station having a connected telephone and sound card. In some instances a file-sharing application is used, allowing a supervisor to view a screen at the agent station as well as to monitor and participate in telephone conversations. However, this is not the case when the call signalling and media stream information is being collected for law enforcement purposes.

In the PSTN network, users have very little or no access to the signalling for their calls. In the IP domain, however, users can have full access to call signaling for their calls. Because the end users can have full access to the call signaling information, the end users might be able to detect surveillance. If the end users are able to detect surveillance, the surveillance becomes useless for law enforcement purposes.

One possible solution to providing IP network surveillance is to wiretap the end user's telecommunications end office, as in International Application No. WO99/55062. However, as discussed above, this solution does not work in the IP environment because there is no guarantee that the end user's call or call signaling will pass through the end office.

Another possible solution to providing IP network surveillance is to use multicast, such as IP multicast, to send a copy of a call to a law enforcement agency. This solution is not practical because the end user's communication device will be able to determine that multicast is being used. Once the end user determines that multicast is being used, the end user will be alerted that he or she is under surveillance.

Yet another possible solution to providing IP surveillance is to use a conference bridge to allow a law enforcement agency to access the call. However, the user's communication device will be able to detect the presence of a conference bridge, e.g., using the Packet InterNet Groper (PING) or traceroute programs. Once the user detects the presence of the conference bridge, the user is alerted that he or she is under surveillance.

In light of the problems discussed above, there exists a need for novel methods and systems for performing surveillance in an IP network in a manner that is not detectable by the end user.

### Disclosure of the Invention

The present invention includes methods and systems for performing IP network surveillance. According to one aspect of the present invention there is provided a method for performing internet protocol network surveillance as claimed in Claim 1. In accordance with a second aspect of the present invention there is provided a system for performing internet protocol network surveillance as claimed in Claim 27. In accordance with a third aspect of the present invention there is provided a computer program product as claimed in Claim 47.

In a system for performing IP network surveillance, an end user transmits call signaling information through a proxy server to establish a call with another end user. The terms "proxy" and "proxy server", are used interchangeably herein to refer to a computer program that functions as an intermediary between network entities. The proxy server communicates with an authentication server to authenticate the end user. The authentication server determines whether the end user is under surveillance. If the end user is under surveillance, the authentication server notifies the proxy server. In response to receiving notification that the end user is under surveillance, the proxy server copies call signaling messages to or from the end user. The proxy server forwards copies of the signaling messages to a recording device.

In order to record the media stream between an end user under surveillance and another end user, after receiving notification that either of the end users is under surveillance, the proxy server determines media stream identification information for either or both end users. As used herein, the phrase "media stream" refers to audio, voice, video, data, applications, or any combination thereof that is packetized and transmitted between end users in a network. In addition to determining the media stream identification information, the proxy server can also determine media stream decoding information for the end users. The proxy server transmits the media stream identification information and the media stream decoding information to a policy server. The policy server instructs an edge router to copy the media stream to or from the end user device based on the media stream identification information. The edge router copies the media stream to or from the end user device and sends a copy of the media stream to a recording device. The policy server can also transmit the media stream decoding information to the recording device to enable decoding of the media stream.

Communications monitored may include audio communications, video communications, data communications, or any combination thereof. Accordingly, the terms "end user device", "PSTN communication device", and "IP communication device", as used herein, include devices capable of communicating using one or more of the above-described media types.

It is therefore an object of the present invention to provide novel methods and systems for performing IP network surveillance.

An object of the invention having been stated hereinabove, other objects will be evident as the description proceeds, when taken in connection with the accompanying drawings as best described hereinbelow. Such objects are achieved in whole or in part by the present invention.

### Brief Description of the Drawings

A description of the present invention will now proceed with reference to the accompanying drawings of which:
Figure 1 is a block diagram illustrating wiretapping in a conventional telecommunications network;
Figure 2 is a block diagram illustrating a system for performing IP network surveillance according to an embodiment of the present invention;
Figure 3 is a protocol layer diagram illustrating exemplary hardware and software of a proxy server according to an embodiment of the present invention;
Figure 4 is a protocol layer diagram illustrating exemplary hardware and software of an authentication server according to an embodiment of the present invention;
Figure 5 is a protocol layer diagram illustrating exemplary hardware and software of a policy server according to an embodiment of the present invention;
Figure 6 is a protocol layer diagram illustrating exemplary hardware and software of an edge router according to an embodiment of the present invention;
Figure 7(a) is a network diagram illustrating methods and systems for performing IP network surveillance for a PSTN to IP telephone call according to an embodiment of the present invention;
Figure 7(b) is a call flow diagram illustrating exemplary call signaling for the network illustrated in Figure 7(a);
Figure 7(c) is a flow chart illustrating exemplary steps that can be performed by a proxy server, an authentication server, and a policy server in performing IP network surveillance according to an embodiment of the present invention;
Figure 8(a) is a network diagram illustrating methods and systems for performing IP network surveillance for an IP to IP telephone call according to an embodiment of the present invention;
Figure 8(b) is a call flow diagram illustrating exemplary call signaling for the network illustrated in Figure 8(a);
Figure 9(a) is a network diagram illustrating methods and systems for performing IP network surveillance for an IP to IP telephone call when one end user forwards his or her calls to a terminal other than the end user's home terminal according to an embodiment of the present invention;
Figure 9(b) is a call flow diagram illustrating exemplary call signaling for the network illustrated in Figure 9(a);
Figure 10(a) is a network diagram illustrating methods and systems for performing IP network surveillance for an IP to PSTN telephone call according to an embodiment of the present invention;
Figure 10(b) is a call flow diagram illustrating exemplary call signaling for the network illustrated in Figure 10(a);
Figure 11(a) is a network diagram illustrating methods and systems for performing IP network surveillance for an IP to PSTN telephone call when one end user forwards his or her calls to a terminal other than the end user's home terminal according to an embodiment of the present invention; and
Figure 11 (b) is a call flow diagram illustrating exemplary call signaling for the network illustrated in Figure 11(a).

### Detailed Description of the Invention

A detailed description of preferred embodiments of the present invention will now proceed with reference to the accompanying drawings. The methods and systems for performing IP network surveillance according to the present invention will be explained in the context of block diagrams, network diagrams, call flow diagrams, and flow charts. The entities and process steps illustrated in these diagrams can be implemented as computer-executable instructions embodied in a computer-readable medium. As used herein, the phrase, "computer-readable medium" refers to any electrical, magnetic, or optical storage medium capable of storing computer-readable instructions. Examples of such computer-readable media include magnetic disks, optical disks, and chip memory devices.

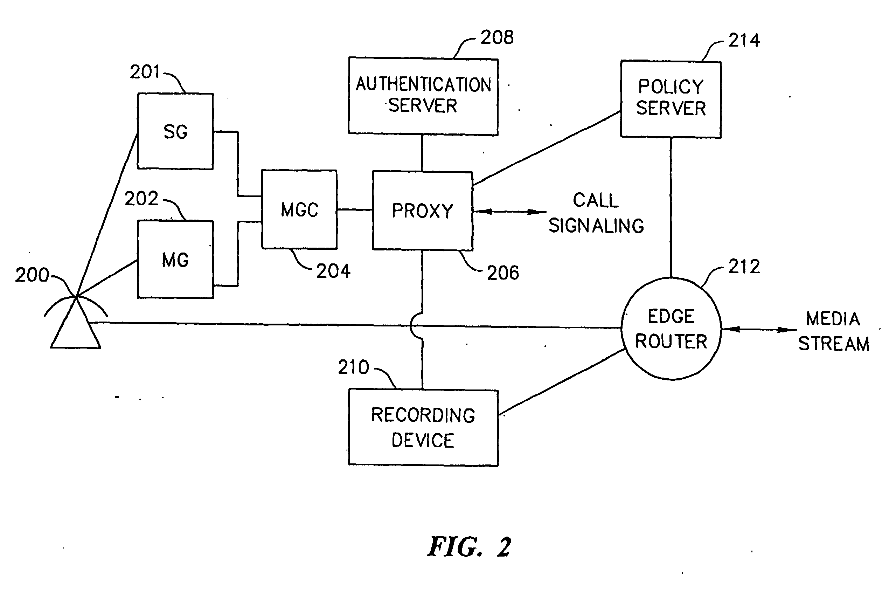

Figure 2 illustrates a communications network including a system for performing IP network surveillance according to an embodiment of the present invention. In Figure 2, an end user device **200** can be an IP telephone capable of transmitting multimedia streams over a network, such as an IP network. In this example, end user device **200** is the subject of surveillance. A signaling gateway **201** and a media gateway **202** allow end user device **200** to communicate with other end user devices over a packet-based network. Either or both of the gateways **201** and **202** can implement a suitable control protocol, such as the Media Gateway Control Protocol (MGCP), that allows call signaling and control to be performed by an external entity, referred to as a call agent or media gateway controller. In the illustrated network, signaling gateway **201** and media gateway **202** are controlled by media gateway controller **204**. Media gateway controller **204** performs call signaling functions, such as communicating with the media gateway controller of another end user to establish a media communications between the end users. For example, media gateway controller **204** can formulate call setup and teardown messages to be communicated to the media gateway controller of another end user.

Proxy **206** functions as an intermediary between entities of the network containing end user device **200** and other networks. Exemplary functions that can be performed by proxy **206** include address translation between internal and external network addresses, control of multimedia sessions, and firewall functions. An exemplary protocol that can be implemented by proxy server **206** to control multimedia sessions between end users is the Session Initiation Protocol (SIP). According to an important aspect of the invention, proxy **206** can also communicate with authentication server **208** to identify end users under surveillance.

Authentication server **208** performs user authentication and surveillance identification functions. For example, authentication server **208** can receive user identification information from end user device **200** and determine whether the user of end user device **200** is authorized to make calls. Such authentication can occur by performing a look up in a database to determine whether to allow communications to or from the end user. If authentication server **208** determines that the user is an authorized user, authentication server **208** communicates this fact to proxy server **206**. Proxy server **206** then allows communication with external network elements, such as the proxy server for another end user.

In order to determine whether an end user or end user device is under surveillance, authentication server **208** preferably includes a users-under-surveillance database. The users-under-surveillance database can be the same database or a different database from the database used to determine whether to allow users to communicate. The users-under-surveillance database can contain entries that correspond to users that are under surveillance. The keys for accessing the entries can include any end user identification information, such as the user's identification for logging onto the network, the IP address of the device through which the user accesses the IP network, or any other information useful for identifying an end user. The users-under-surveillance database is preferably programmable to allow a service provider or a law enforcement entity to add and delete users from the database and to modify user selection criteria. For example, it may be desirable to monitor IP telephone calls and not HTTP sessions for a given user.

When authentication server **208** receives an authentication message from proxy **206**, authentication server **208** can perform a look up in the users-under-surveillance database. If the authentication server **208** determines that the end user is under surveillance, authentication server **208** informs proxy **206** of this fact. In response to receiving notification that the end user is under surveillance, proxy **206** copies call signaling messages relating to calls to or from end user device **200**. Proxy **206** forwards copies of the call signaling messages to a recording device **210**. Recording device **210** can be an IP client that records call signaling messages received from proxy **206** in a log file.

In order to record the media stream between an end user under surveillance and another end user, it is desirable to identify a network entity through which the media stream is guaranteed to travel. It is also desirable to determine media stream identification information for incoming and outgoing media packets and is desirable to determine media stream decoding information for the media packets. The media stream decoding information may be determined from call signaling messages or from the media packets themselves. The recording device **210** may decode the media stream in real time or store the media stream by controlling the edge router or edge routers that handle the media stream for an end user under surveillance. In an IP network, all media stream packets from an end user device are transmitted through one or more edge routers. There may be more than one edge router for purposes of load sharing. However, in such a case, surveillance may still be performed. In the illustrated embodiment, all media stream packets, associated with, i.e., transmitted to or from, end user device **200** pass through edge router **212**. Edge router **212** comprises a network entity that controls network access for any end user and is controlled by policy server **214**. Since all media stream packets to or from end user device **200** are guaranteed to pass through edge router **212**, this device can be used to copy the media stream associated with an end user under surveillance.

When proxy **206** is notified that end user device **200** is the subject of surveillance, proxy **206** informs policy server **214** of this fact. A policy server is a network entity that instructs routers, such as edge router **212**, on how to control bandwidth and resources. An example of a policy server suitable for use as policy server **214** of the present invention is a DIFFSERV policy server. A DIFFSERV policy server includes multiple queues and a queue management program that implements differential quality of service for different calls.

According to the present embodiment, policy server **214** preferably also performs a surveillance function by instructing edge router **212** to copy the media stream for users under surveillance. For example, policy server **214** can receive notification from proxy **206** that end user device **200** is the subject of surveillance. Policy server **214** can also receive media stream identification and decoding information from proxy **206**. Proxy **206** can also communicate media stream identification information and decoding information to policy server **206**. Policy server **214** can determine the edge router serving end user **200** from the media stream identification information and can communicate the media stream identification information and decoding information to edge router **212**. Edge router **212** can then forward copies of the media stream to and from end user device **200** to recording device **210**. Recording device **210** can store the media stream on a storage medium, such as a disk storage medium. Edge router **212** can also forward the media stream decoding information to recording device **210** to enable decoding of the media stream. Thus, according to the present embodiment, proxy **206**, authentication server **208**, policy server **214**, and edge router **212** cooperate to perform IP network surveillance. Each of these components will now be discussed in more detail.

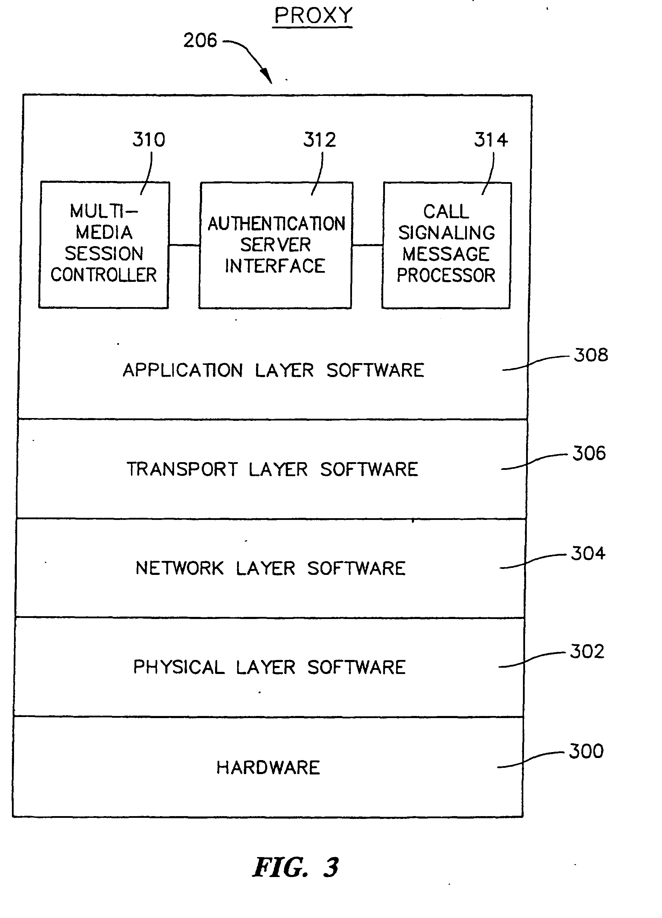

Figure 3 is a protocol layer diagram illustrating an exemplary architecture of a proxy server according to an embodiment of the present invention. Referring to Figure 3, proxy generally designated **206** includes hardware **300** for executing programs and for communicating with other entities over a network. For example, proxy hardware can include one or more processors having associated program memory and data memory for storing programs and data, including programs and data for performing IP network surveillance according to embodiments of the present invention. Proxy hardware **300** can also include one or more communications adapters, such as one or more Ethernet adapters. An example of proxy server hardware suitable for use with the present invention is a general purpose computer, such as an IBM-compatible computer, a Macintosh computer, or a UNIX computer.

Physical layer software **302** allows proxy **206** to communicate with devices directly connected to proxy **206**. Exemplary physical layer communications software includes media access control (MAC) software. Network layer software **304** includes functionality for communicating over a packet-based network, such as an IP network. Transport layer software includes functionality for reliable or unreliable communication with other devices. For example, exemplary transport layer software suitable for use with the present invention includes transfer control protocol (TCP) or user datagram protocol (UDP) software.

Application layer software **308** includes functionality for controlling access to internal and external networks, for performing authentication, for controlling multimedia sessions, and for performing IP network surveillance. In the illustrated embodiment, application layer software **308** includes multimedia session controller **310** for controlling multimedia sessions between end users, authentication server interface **312** for communicating with authentication server **208** to determine whether an end user is under surveillance, and call signaling message processor **314** for copying call signaling messages and for determining media stream identification and decoding information from the call signaling messages.

The present invention is not limited to proxy server **206** with an authentication server interface **312** for communicating with an authentication server to determine whether an end user is under surveillance. In an alternative embodiment of the invention, authentication server interface **312** may be replaced by a surveillance interface for communicating with any type of external entity, such as a directory server, to determine whether an end user is under surveillance.

Multimedia session control interface **310** can be any communication interface for controlling multimedia communications between end users. In a preferred embodiment of the invention, multimedia session control interface **310** comprises a session initiation protocol (SIP) server. The session initiation protocol is described in detail in request for comments (RFC) 2543, "SIP: Session Initiation Protocol", Internet Engineering Task Force, March 1999. entirety. According to the SIP protocol, the SIP server invites end users to join communication sessions with each other. Details of the functionality of the SIP server as it relates to IP network surveillance will be described more fully below.

Authentication server interface **312** communicates with authentication server **208** to perform surveillance functions. Such functions include sending user identification information to authentication server **208**, and receiving information indicative of whether an end user is under surveillance. In response to receiving notification that an end user is under surveillance, authentication server interface **312** can notify call signaling message processor **314**, which can, in turn, send copies of call signaling messages directed to or from the user under surveillance to recording device **210**. In addition to forwarding copies of call signaling messages to recording device **210**, call signaling message processor **314** can also process call signaling messages for an end user under surveillance to extract media stream identification and decoding information from call signaling to or from an end user under surveillance. The processing of call signaling messages to extract media stream identification and decoding information will be discussed in more detail below.

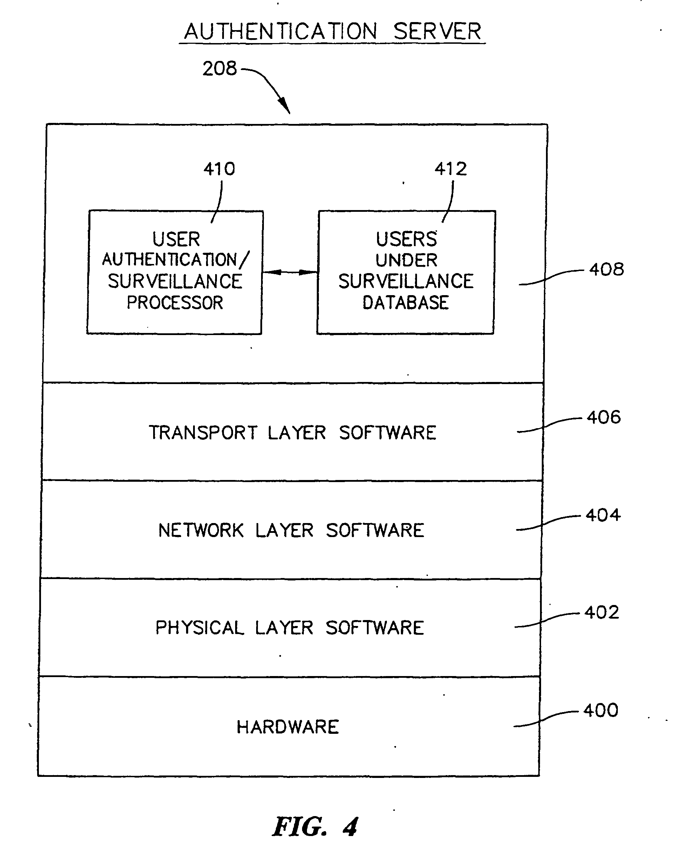

Figure 4 illustrates an exemplary authentication server according to an embodiment of the present invention. In the illustrated embodiment, authentication server generally designated **208** includes hardware **400**, physical layer software **402**, network layer software **404**, and transport layer software **406**. These layers are preferably the same or similar to the corresponding layers **300** through **306** described with respect to the proxy **206** illustrated in Figure 3. Accordingly, a description of these layers is not repeated herein.

According to an aspect of the invention, authentication server **208** includes application layer software **408** for performing user authentication and surveillance identification. In particular, application layer software **408** includes user authenticator/surveillance processor **410** and a users-under surveillance-database **412**. User authenticator/surveillance processor **410** receives user authentication information from authentication server interface **314** illustrated in Figure 3 and performs user authentication based on this information. For example, user authenticator/surveillance processor **410** can receive user IDs and passwords from authentication server interface **314** illustrated in Figure 3. User authenticator/surveillance processor **410** can also access the users-under-surveillance database **412** to determine whether a user is under surveillance. If user authenticator/surveillance processor **410** determines that a user is under surveillance, user authenticator/surveillance processor **410** preferably notifies proxy **206** of this fact, e.g., by sending a message to authentication interface **314**.

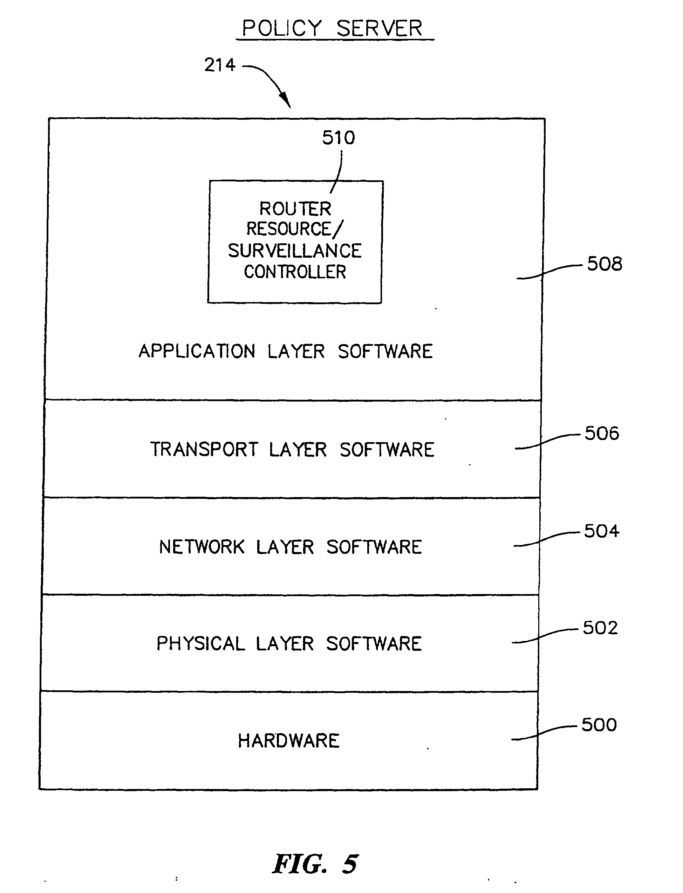

Figure 5 illustrates an exemplary policy server according to an embodiment of the present invention. In the illustrated embodiment, policy server generally designated **214** includes hardware **500**, physical layer software **502**, network layer software **504**, and transport layer software **506**. These layers contain similar functionality to those described with respect to Figure 3, and a description thereof is therefore not repeated herein. Application layer software **508** includes router resource/surveillance controller **510**. Router resource/surveillance controller **510** controls router bandwidth, e.g., by implementing a queue management procedure, and also controls surveillance. For example, router resource/surveillance controller **510** can receive notification from policy server **214** that an end user is under surveillance. The notification can include media stream identification information for incoming and outgoing media streams to and from the end user under surveillance. Router resource/surveillance controller **510** can forward this information to an edge router so that the media stream can be copied or recorded. Router resource/surveillance controller **510** can also communicate media stream decoding information to edge router **212** to enable decoding of the media stream.

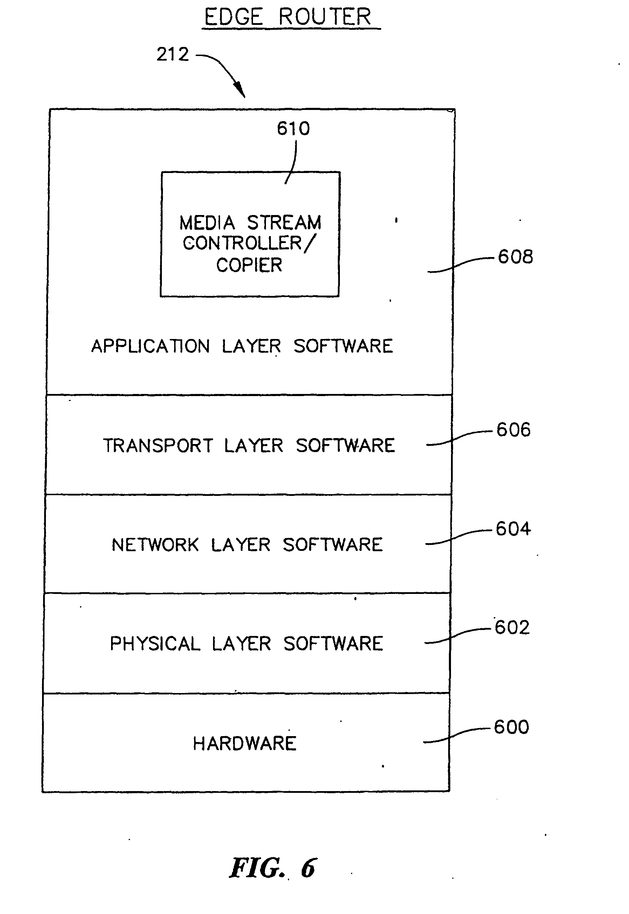

Figure 6 illustrates an exemplary embodiment of an edge router according to the present invention. In the illustrated embodiment, edge router generally designated **212** includes hardware **600**, physical layer software **602**, network layer software **604**, and transport layer software **606**. These layers are preferably similar or identical in function to those described with respect to Figure 3, and description thereof is therefore not repeated herein. In the illustrated embodiment, edge router **212** also includes application layer software **608**. Application layer software **608** includes media stream controller/copier **610**. Media stream controller/copier **610** routes the incoming and outgoing media stream to and from end user devices, such as end user device **200** to which the edge router is connected. When edge router **212** receives notification from policy server **214** that end user device **200** is under surveillance, media stream controller/copier **610** copies the media stream and sends copies of the media stream to recording device **210**. Media stream controller/copier **610** can also communicate media stream decoding information to recording device **210** to enable decoding of the media stream.

### Surveillance of a PSTN to IP Telephone Call

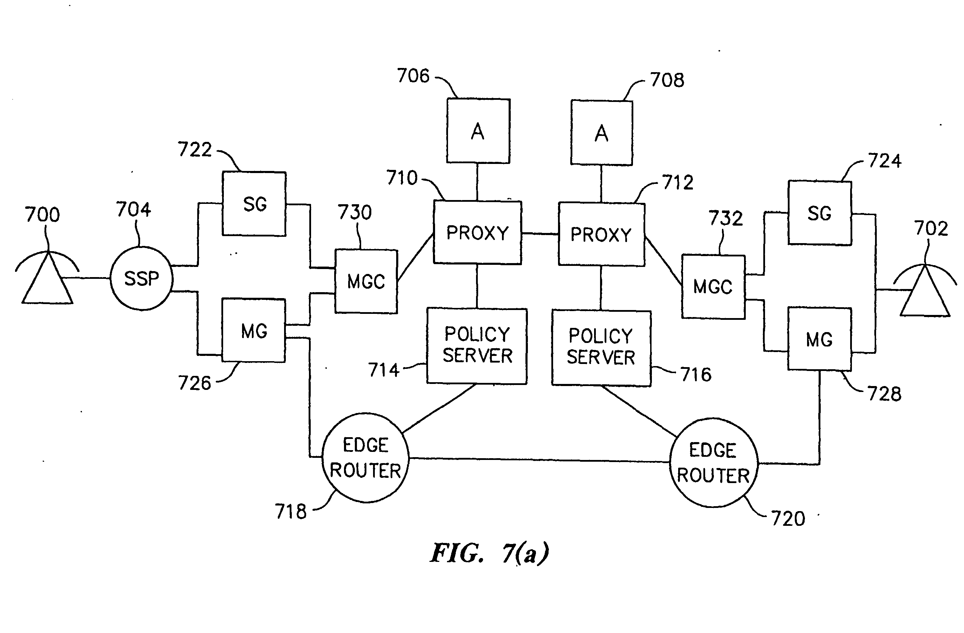

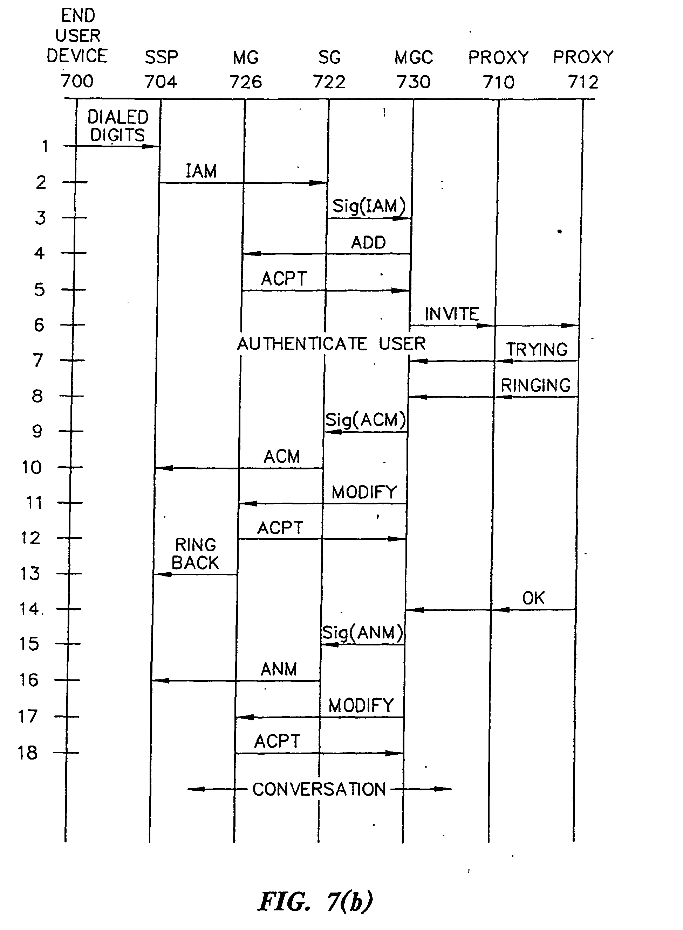

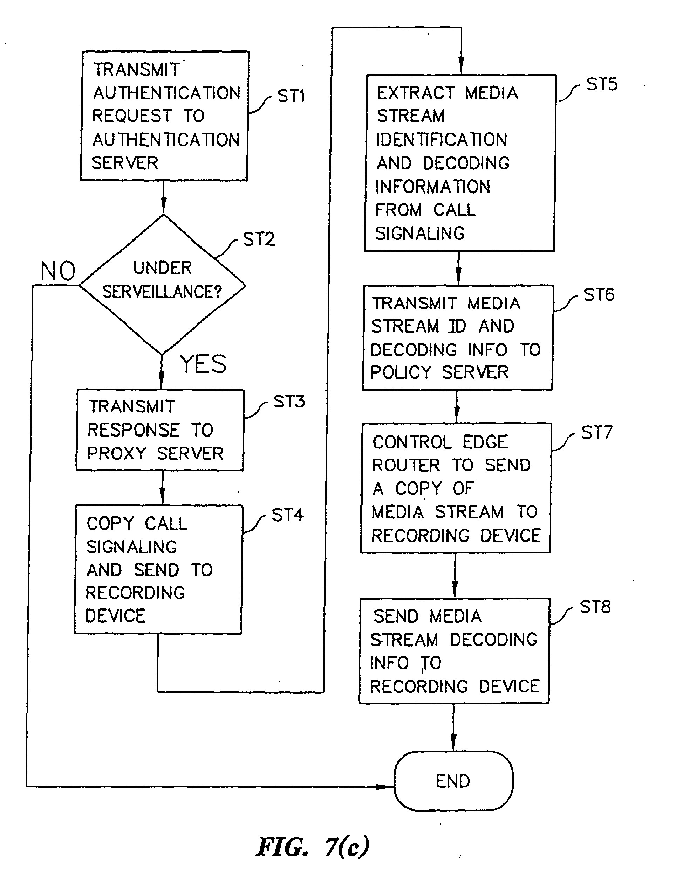

The present invention can be used to perform IP network surveillance of IP telephone calls originating from an IP network or from the public switched telephone network (PSTN). Figures 7(a) - 7(c) illustrate methods and systems for IP network surveillance of a PSTN to IP telephone call. The examples illustrated in Figure 7(a) - 7(c) are explained in the context of MGCP call signaling, although the present invention is not limited to using MGCP call signaling. For example, any other suitable call signaling protocol, such as H.323, can be used.

Figure 7(a) is a block diagram illustrating the network entities that can be involved in a PSTN to IP telephone call. In the illustrated embodiment, a first end user device **700** initiates a call to a second end user device **702**. First end user device **700** can be a traditional PSTN telephone. Second end user **702** can be an IP telephone adapted to send and receive audio over an IP network. Because end user device **700** is connected to the PSTN network, all calls to and from end user device **700** pass through a service switching point (SSP) **704**. Thus, if it is desired to record media stream or call signaling information to or from end user device **700**, such recording can be accomplished by placing a recording device at SSP **704**. However, because all calls to or from end user device **702** are not guaranteed to pass through the same end office or SSP, monitoring call signaling and media stream information to and from end user **702** can be accomplished using authentication servers **706** and **708**, proxies **710** and **712**, policy servers **714** and **716** and edge routers **718** and **720**.

The remaining elements illustrated in Figure 7(a) are adapted to perform call signaling and media stream communication function over a packet based network such as an IP network. In the illustrated embodiment, the remaining elements are media gateway control protocol (MGCP) elements. For example, signaling gateways **722** and **724** encapsulate and unencapsulate call signaling messages to and from end users devices **700** and **702**, respectively, for transmission over a packet based network, such as an IP network. Similarly, media gateways **726** and **728** encapsulate and unencapsulate the media stream between end user **700** and **702**. Media gateway controllers **730** and **732** control media gateways **726** and **728**, respectively, e.g., using MGCP events.

Figure 7(b) illustrates an exemplary call flow diagram for a call between end user **700** and end user **702**. In line 1 of the call flow diagram, end user **700** dials the telephone number of end user device **702** (illustrated in Figure 7(a)) and the dialed digits are communicated to SSP **704**. In line 2 of the call flow diagram, SSP **704** formulates and initial address message (IAM) and transmits the IAM to signaling gateway **722**. The IAM message is an ISDN setup (ISUP) message used to request a call. In line 3 of the call flow diagram, signaling gateway **722** encapsulates the IAM message in an IP packet and forwards the IAM message to media gateway controller **730**. In line 4 of the call flow diagram, in response to the IAM message, media gateway controller **730** transmits an ADD message to media gateway **726**. The ADD message instructs media gateway **726** as to how to set up the interface for receiving the media stream. In line 5 of the call flow diagram, in response to the ADD message, media gateway **726** transmits an accept (ACPT) message to media gateway controller **730**. The ACPT message from media gateway **726** includes the media flow IP address and port number associated with the gateway **726** for receiving the media stream from media gateway **728** and end user device **702** for the call.

In line 6 of the call flow diagram, in response to the ACPT message, media gateway controller **730** transmits an INVITE message to proxy server **710**. The INVITE message is a Session Initiation Protocol (SIP) message used to invite the called party to join a call with the calling party. The INVITE message includes the media flow IP address and port number on media gateway **726** for end user **700**. It is this IP address and port number that can be used to record media stream information from end user device **702**. The INVITE message also includes identification information for the called and calling parties. An example of an INVITE message is as follows:
- 1: INVITE sip: 1.1.1.2. SIP 2/0
- 2: From: sip: user_1@server_1.network_1.com
- 3: To: sip: user_2@server_2.network_2.com
- 4: Call-ID 125@proxy1.network1.com
- 5: Cseq 225 INVITE
- 6: Content type: application/sdp
- 7: Content Length: 190
- 8:
- 9: v=0
- 10: o=user_1,1, IN IP4 1.1.1.1
- 11: c=IN IP4 1.1.1.2
- 12: m=audio 1200 RTP/AVP 0
In the example INVITE message set forth above, line numbers are included on the left side of the message to facilitate discussion of the content of the message. These line numbers are used for illustrative purposes only and are not part of an actual INVITE message. In the example INVITE message, lines 1-7 contain header fields, and lines 9-12 contain the message body. Line 8 is a carriage-return line-feed (CRLF) that separates the message header from the message body. In the message header, line 1 is the request header, which begins with a method token, followed by the request-URI, and the protocol version, and ending with CRLF. In the illustrated message, the method token is "INVITE", the request-URI is "sip 1.1.1.2", and the version is "SIP 2/0".

Lines 2-8 are the general header for the INVITE message. In line 2, the "From" general header field indicates the initiator of the INVITE message. In the illustrated message, the initiator is "user_1@server_1.network_1.com". In line 3, the "To" general header field indicates the recipient of the INVITE message. In the illustrated message, the recipient is "user_2@server_2.network_2.com". The information from the "From" and "To" fields can be used to determine whether user 1, user 2, or both are under surveillance. The signaling required to perform authentication will be discussed in more detail below.

In line 4 of the INVITE message, the call-ID general header field uniquely identifies an invitation for all registrations of a particular client. In the illustrated message, the call-ID is "125". The host is "proxy_1.network_1.com". The call-ID "125" uniquely identifies the call requested by the INVITE message within the domain proxy_1.network_1.com. The call-ID can be used to identify call signaling messages to or from a user under surveillance for a particular call. The signaling required for recording call signaling messages will be discussed in more detail below.

In line 5 of the INVITE message, the Cseq general header field indicates the command sequence number for the INVITE message. In the illustrated message, the command sequence number is "225". The sequence number is used by SIP proxy servers to identify and order SIP messages.

Lines 6 and 7 of the INVITE message are the entity-header of the INVITE message. In line 6, the content-type entity header field indicates the media type of the message body sent to the recipient. In the illustrated message, the media type is "application/sdp", indicating that the message body contains Session Description Protocol (SDP) information. In line 7, the content length entity header field indicates the size of the message body in decimal number of octets, sent to the recipient. In the illustrated message, the content length is specified as "190", indicating that the message body contains 190 octets of information.

As discussed above, lines 9-12 of the INVITE message are the message body. Since the content type entity header field in line 6 indicates that the message body is in SDP format, the fields in the message body are SDP fields. In line 9, the "v=" or version field indicates the SDP version number. In the illustrated message, the SDP version is "0". In line 10, the "o=" or origin field indicates the originator of the session by username and the address of the user's host, and a session ID and version number. In the illustrated message, the user name is the user's login ID on the user's proxy server. In the illustrated message, the user's login ID is user_1. This information can be used in addition to or in lieu of the identification in the "From" general header field to authenticate the calling user and determine whether the calling user is under surveillance. The session ID in the origin field is "1". Thus number, when combined with the remaining parts of the origin field uniquely identifies the session. The network part of the origin field is "IN", indicating Internet type. The address type part of the origin field is "IP4", indicating Internet protocol version 4. The address part of the origin field is a globally unique address for the machine that initiated the request. In the illustrated message, the address is "1.1.1.2", which can be the IP address of MGC **730**.

The "c=" or connection data field of the IP address contains connection data for the message. In the illustrated INVITE message from the proxy server of end user device **700**, the connection data is the IP address for the incoming media stream from end user device **702** to end user device **700**. However, because end user device **700** is a PSTN device, it does not have its own IP address. Rather, because end user device sends and receives IP telephone calls through media gateway **726**, the IP address in the "c=" field will be that of MG **726**. In the illustrated message, this IP address is "1.1.1.2". This IP address can be communicated to the edge router for an end user to allow the edge router to identify and copy the media stream to an end user under surveillance. The signaling for communicating the media stream IP address to the edge router of an end user under surveillance will be discussed in more detail below. The network type and IP version are also specified in the same manner as in the "c=" field.

The "m=" or media field of the message body includes information required to decode the incoming media stream of an end user. More particularly, the "m=" field indicates the type, the port number, the transport, and a format list for the incoming media. In the illustrated message, the media type is "audio", indicating that the incoming media stream- is audio. Additional media streams that can be copied according to embodiments of the present invention include: video, application, data, and control. The second sub-field of the "m=" field is the transport port number to which the media stream will be sent. This port number can also be communicated to the edge router for an end user under surveillance so that the edge router will know on which port to monitor and/or copy the incoming media stream. The third sub-field in the "m=" message is the transport protocol. In the illustrated message, the transport protocol is "RTP/AVP", indicating that the Realtime Protocol using the Audio/Video profile will be used. The fourth sub-field of the "m=" message is the format. In the illustrated message, the format is specified as "0", indicating that the payload type is mu-law pulse-code-modulation (PCM) coded single channel audio PCM sampled at 8 kHz. One or more of the sub-fields in the "m=" field comprise media stream decoding information that can be communicated to the edge router and/or the recording device to facilitate decoding of the media stream for an end user under.

Referring again to Figure 7(b), in line 6, after receiving the INVITE message, proxy server **710** contacts authentication server **706** (illustrated in Figure 7(a)) to authenticate end user device **700** and end user device **702**. According to an embodiment of the present invention, authentication server **706** preferably determines whether end user device **700** or end user device **702** is under surveillance.

Figure 7(c) illustrates exemplary steps that can be performed by authentication server **706** and proxy **710** to determine whether either of the end user devices is under surveillance. In step **ST1**, proxy **710** transmits the authentication request to authentication server **706**. In step **ST2**, authentication server **706** determines whether either of the end users is under surveillance. For example, authentication server **706** can compare the user identification information extracted from the "To" and "From" fields of the INVITE message to entries in the users-under-surveillance-database described with respect to Figure 4. Alternatively, user identification can be extracted from other fields in the INVITE message, such as the Session ID field. Any manner of identifying an end user or an end user device from the fields of a call signaling message, such as an INVITE message, is intended to be within the scope of the invention.

In step **ST3**, authentication server **706** transmits a response to proxy server **710**. If authentication server **706** determines that either of the end users is under surveillance, the response from authentication server **706** can include such an indication. In step **ST4**, in response to receiving notification that end user **702** is under surveillance, proxy server **710** identifies, copies, and sends call signaling information to or from end user **700** with regard to the present call to a recording device. This function can be performed by the call signaling message processor, for example, as described with respect to Figure 3.

The call signaling message processor of proxy server **710** can also extract the media stream identification and decoding information from the INVITE message (step **ST5**). For example, the call signaling message processor can extract the media flow IP address from the "c=" field of the SDP portion of the INVITE message and the port number from the "m=" field of the INVITE message. The media stream decoding information and port number can be extracted from the "m=" field of the INVITE message. Proxy server **710** then sends the media flow IP address and media stream decoding information to policy server **714** (**ST6**). Policy server **710** controls edge router **712** to copy the media stream to or from the- specified address (step **ST7**). Edge router **718** copies the media stream information to or from the specified IP address and forwards the media stream information to a recording device (**ST8**). Edge router **718** can also communicate the media stream decoding information to the recording device to enable decoding of the media stream.

The present invention is not limited to having the proxy server forward the media stream identification and decoding information to the policy server. For example, in an alternative embodiment of the invention, the proxy server can forward the media stream identification information to the authentication server, and the authentication server can communicate the media stream identification and decoding information to the policy server when the authentication server determines that an end user is under surveillance. Either method is intended to be within the scope of the invention.

As discussed above, proxy **710** may extract media stream identification information and media stream decoding information from call signaling messages transmitted between end user device **700** and end user device **702**. However, the present invention is not limited to such an embodiment. For example, in an alternative embodiment, proxy **710**, may forward copies of call signaling information between end users to a recording device without extracting the media stream decoding information. The recording device or other law-enforcement-controlled entity may extract the media stream decoding information from the recorded call signaling messages or from the media stream.

Referring back to Figure 7(b), in line 7, proxy **712** of the called end user responds to the INVITE message by sending a TRYING message to proxy **710**, and proxy **710** forwards the TRYING message to MGC **730**. In line 8, proxy **712** sends a RINGING message to proxy **710**, which indicates that end user **702** is being alerted. Proxy **710** forwards the RINGING message to media gateway controller **730**. In line 9, media gateway controller **730** transmits an encapsulated address complete (ACM) message to signaling gateway **722**. In line 10, signaling gateway **722** forwards the ACM message to SSP **704**. The ACM message indicates to SSP **704** that the called end user is being alerted.

In line 11, media gateway controller **730** sends a MODIFY message to media gateway **726**. In line 12, media gateway responds by sending an ACCEPT (ACPT) message to media gateway controller **730**. In line 13, media gateway **726** applies a ringback signal, which passes through SSP **704**, to end user device **700**.

In line 14 of the call flow diagram, when the user of end user device **702** answers the call, proxy **712** sends an OK message to proxy **710**. Proxy **710** forwards the OK message to MGC **710**. The OK message includes the IP address of the end user device receiving the call, i.e., end user device **702**. This IP address, like the media flow IP address transmitted to proxy server **710**, can be used to record the media flow from the called party to the calling party. For example, proxy server **712** could transmit the media flow IP address for end user **702** to policy server **716**. Policy server **716** would then forward the IP address to edge router **720**.

In line 15, media gateway controller **730** sends an ANSWER (ANM) message to SG **722**. In line 16, signaling gateway **722** forwards the ANM message to SSP **704** indicating that the call has been answered. After another exchange of MODIFY and ACPT messages between media gateway **726** and media gateway controller **730** (lines 17 and 18), a conversation can occur between end user devices **700** and **702**. Specifically, the media stream is transmitted between edge routers **718** and **720**. If either user is under surveillance, either or both edge routers can send a copy of the media stream information to a recording device, as described above. In addition, proxy **710**, proxy **712**, or both forward copies of call signaling messages, such as SIP messages, to the recording device. Thus, the present invention provides a reliable method of performing surveillance of a PSTN to IP telephone call when either the PSTN end user, the IP end user, or both are under surveillance.

### Surveillance of an IP to IP Telephone Call

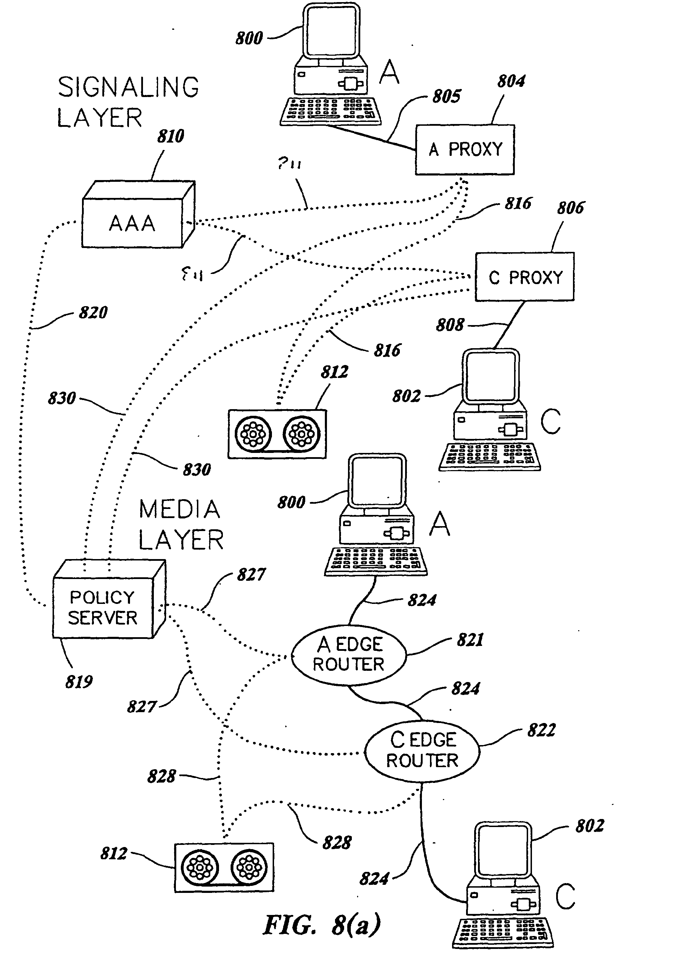

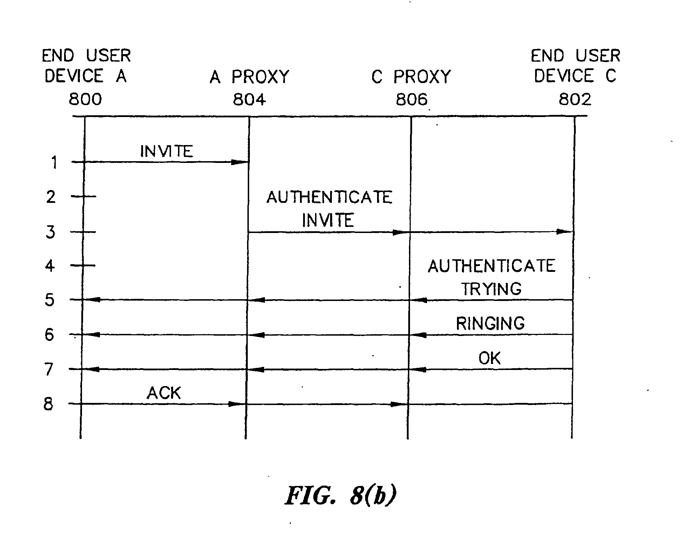

Figure 8(a) illustrates methods and systems for IP network surveillance according to an embodiment of the present invention for an IP to IP telephone call. In Figure 8(a), end user device A **800** places a call to end user device C **802**. The upper portion of Figure 8(a) illustrates signaling layer communications, such as SIP communications, for end user device A **800** and end user device C **802**. In order to simplify explanation of the invention, MGCP entities and communications are omitted from Figure 8(a). The lower portion of Figure 8(a) illustrates media layer communications, such as media stream communications, for end user device A **800** and end user device C **802**.

In the upper portion of Figure 8(a), end user device A **800** sends call signaling messages to A proxy **804** to establish calls with other users. Accordingly, solid line **805** between end user device A **800** and A proxy **804** represents conventional call signaling messages transmitted from an end user device to a proxy server. Similarly, solid line **808** between end user device C **802** and C proxy **806** represents existing call signaling messages transmitted between these devices.

According to an important aspect of the invention, authentication server **810** communicates with A proxy **804** and C proxy **806** to authenticate the end users and determine whether the end users are under surveillance. Accordingly, dashed line **811** represents new authentication signaling messages according to an embodiment of the present invention. Recording device **812** records call signaling messages when end user device A **800** and/or end user device C **802** is under surveillance. Accordingly, dashed lines **816** represent new call signaling messages between proxy servers and a recording device according to an embodiment of the present invention. Finally, dashed lines **830** represent communication between proxy servers **804** and **806** and policy server **819** to indicate that one of the end users is under surveillance, to communicate media stream identification information to policy server **819**, and to communicate media stream decoding information to policy server **819**. Alternatively, as discussed above, this information can be communicated from the authentication server to the policy server. Accordingly, dashed line **820** can represent communication of media stream identification information, media stream decoding information, and information indicating that one of the end users is under surveillance between authentication server **810** and policy server **819**.

In the lower portion of Figure 8(a), media stream communications between end user device A **800** and end user device C **802** occur through A edge router **821** and C edge router **822**. Accordingly, solid lines **824** represent conventional bearer channel or media stream communications between end user device A **800** and end user device C **802**.

Policy server **819** controls A edge router **821** and/or C edge router **822** to send copies of media stream communications between end user device A and end user device C to recording device **812** when either end user device A **800** or end user device C **802** is under surveillance. Accordingly, dashed lines **827** represent new signaling messages between policy server **819** and edge routers **821** and **822** for informing the edge routers that the end users are under surveillance. In addition, in order to copy and decode the media stream between the end users, signals represented by dashed lines **827** can also include media stream identification information for identifying the media stream between end user device A device **800** and end user device C **802**, and media stream decoding information. Dashed lines **828** represent the flow of media stream information from A edge router **821** and C edge router **822** to recording device **812** according to an embodiment of the present invention.

Figure 8(b) is a call flow diagram illustrating an exemplary call flow between the entities in Figure 8(a) for establishing an IP to IP phone call between end user device A **800** and end user device C **802**. In line 1, end user device A **800** transmits an INVITE message to A proxy **804**. In line 2, A proxy **804** determines whether end user device A **800** or end user device C **802** is under surveillance. The steps for determining whether the end user devices are under surveillance can be similar to those illustrated in Figure 7(c) for the PSTN to IP case. For example, first, A proxy **804** can send an authentication request to authentication server **810** (illustrated in Figure 8(a)). The request can include user identification information for end user device A and end user device C. Authentication server **810** can perform a lookup in the users-under-surveillance database based on the identification information. Authentication server **810** can then send a response to A proxy **804** indicating whether one or both of the end user devices are under surveillance. If A proxy **804** receives notification that either or both end user devices are under surveillance, A proxy **804** preferably sends copies of call signaling information between end user device A **800** and end user device C **802** to recording device **812** (illustrated in Figure 8(a)). A proxy **804** preferably also notifies policy server **819** that the end user devices are under surveillance. A proxy **804** preferably also sends media stream identification information and media stream decoding information to policy server **819** to trigger and enable copying of the media stream to end user device A **800** from end user device C **802**.

In line 3 of the call flow diagram, A proxy **804** forwards the INVITE message to C proxy **806**, which forwards the INVITE message to end user device C. In line 4 of the call flow diagram, C proxy can determine whether end user device A, end user device C, or both are under surveillance, in the same manner described above with respect to line 2 of the call flow diagram. In line 5 of the call flow diagram end user device C transmits a TRYING message to end user device A, indicating that an attempt is being made to alert end user device C. In line 6 of the call flow diagram, end user device C **802** transmits a RINGING message to end user device A indicating that end user device C **802** is being alerted. In line 7 of the call flow diagram, when the user of end user device C **802** answers the call, end user device C **802** transmits an OK message to end user device A **800**. The OK message includes the media flow IP address and port number and media flow decoding information for the incoming media flow for end user device C. Accordingly, this information is preferably communicated to policy server **819** (illustrated in Figure 8(a)), C edge router **822** (illustrated in Figure 8(a)), and recording device **812** (illustrated in Figure 8(a)) to enable copying and decoding of the media stream to and from end user device C **802**.

In line 8 of the call flow diagram, end user device A **800** transmits an ACK message to end user device C. Once this occurs, media stream communications occur between end user device A **800** and end user device C **802** through edge routers **821** and **822** (illustrated in Figure 8(a)). Because edge routers **821** and **822** have been notified that one or both of the end users are under surveillance, edge routers **821** and **822** can send copies of the media stream to recording device **812**. Call signaling information can be collected from proxy servers **804** and **806**. Other than the copying of call signaling and the media stream, communications between end user device A and end user device C **800** is normal. Accordingly, embodiments of the present invention provide methods for performing IP surveillance where there is a reduced likelihood of detection by the end users.

### IP to IP Network Surveillance when Calls to One Party are Forwarded

Embodiments of the present invention for performing IP network surveillance are useful not only to monitor telephone calls where the end user is receiving calls at his or her home terminal, but also to monitor telephone calls where calls directed to the end user surveillance are forwarded to another terminal. The capability to monitor forwarded calls is important in the IP environment to prevent circumvention of surveillance measures using call forwarding.

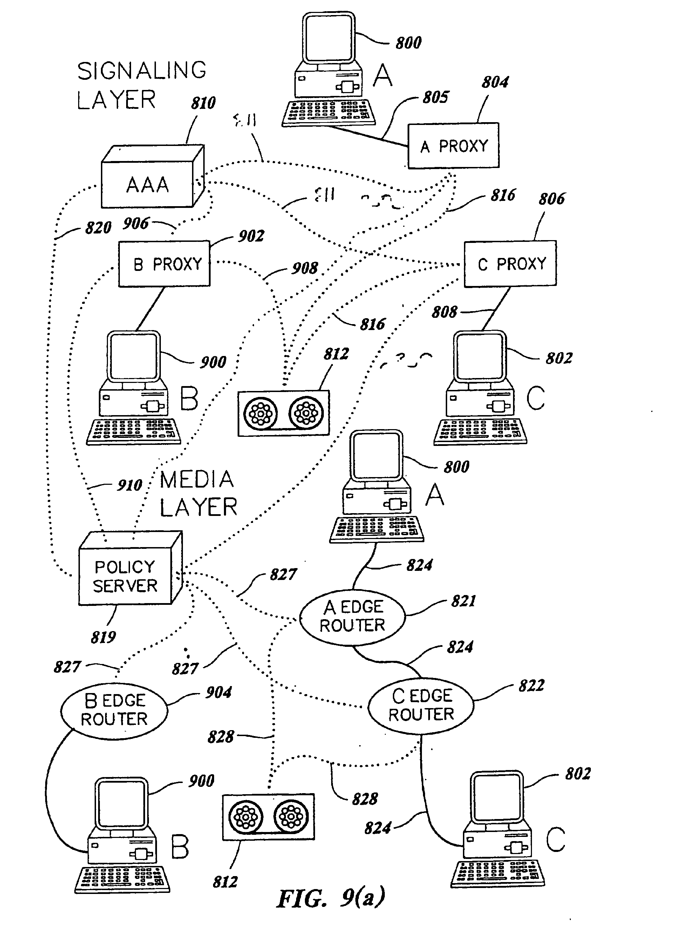

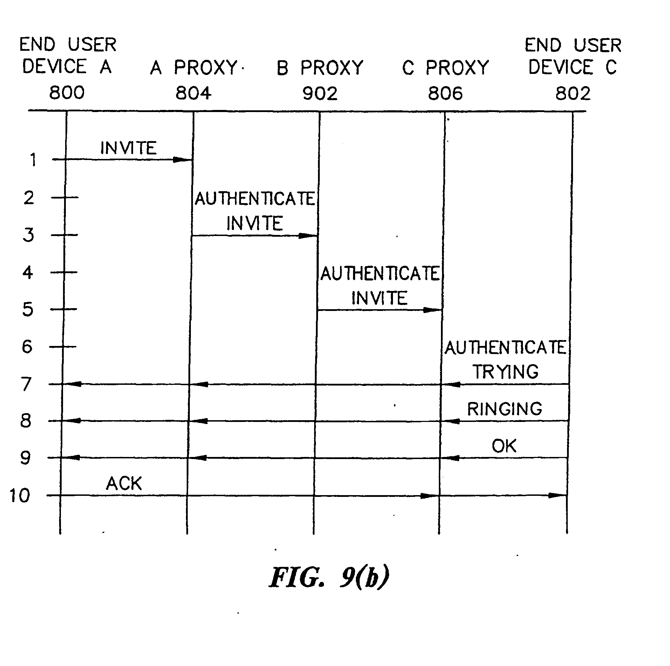

Figure 9(a) illustrates a system for performing IP network surveillance in an IP to IP telephone call when a call to an end user is forwarded to another terminal. In Figure 9(a), entities and signals that are labeled by the same reference numerals as the entities and signals in Figure 8(a) represent like elements. Thus, a description of these entities and signals is not repeated herein. New entities introduced by Figure 9 include end user device B **900**, B proxy **902**, and B edge router **904**. Authentication signaling between B proxy **902** and authentication server **810** is illustrated by dashed line **906**. Communication of call signaling information from B proxy to recording device **812** is illustrated by dashed line **908**.

Figure 9(b) is a call flow diagram illustrating exemplary call signaling for performing IP network surveillance in the environment illustrated in Figure 9(a). In the call flow diagram, end user device A **800** is the calling party, and end user device B **900** (illustrated in Figure 9(a)) is the called party. However, end user device B **900** has been forwarded to end user device C 802.

In line 1 of the call flow diagram, end user device A **800** transmits an INVITE message to A proxy **804**. The INVITE message includes information that identifies end user device B as the called party, e.g., in the "To" field of the message. In line 2, A proxy **804** determines whether end user device A **800** or end user device B **900** is under surveillance. The steps for determining whether the end users are under surveillance can be similar to those illustrated in Figure 7(c) for the PSTN to IP case. For example, first, A proxy **804** can send an authentication request to authentication server **810** (illustrated in Figure 9(a)). The request can include user identification information for end user device A **800** and end user device B **900**. Authentication server **810** can perform a lookup in the users-under-surveillance database based on the identification information. Authentication server **810** can then send a response to A proxy **804** indicating whether end user device A **800** or end user device B **900** is under surveillance. If A proxy **804** receives notification that either or both end user devices are under surveillance, A proxy **804** preferably sends copies of call signaling information between end user device A **800** and end user device B **900** to recording device **812**. A proxy **804** preferably also notifies policy server **819** (illustrated in Figure 9(a)) that the end users are under surveillance, sends media stream identification information, and sends media stream decoding information to policy server **819** to trigger and enable copying of the media stream between end user device A **800** and end user device B **900**.

In line 3 of the call flow diagram, A proxy **804** forwards the INVITE message to B proxy **902**. In this example, B proxy determines that calls directed to end user device B **900** have been forwarded to end user device C **802**. In line 4 of the call flow diagram, B proxy determines whether end user device A, end user device B, end user device C, or all three end users are under surveillance. Determining whether any of the end user devices is under surveillance can be accomplished in the same manner described above with respect to line 2 of the call flow diagram. In line 5 of the call flow diagram, B proxy **902** forwards the INVITE message to C proxy **806**. In line 6 of the call flow diagram C proxy **806** can determine whether end user device A, end user device B, or end user device C is under surveillance by communicating with authentication server **810** in the manner described above. If any of the end users are determined to be under surveillance, C proxy **806** preferably also sends media stream identification and decoding information extracted from the INVITE message to policy server **819**. In line 7 of the call flow diagram, end user device C transmits the TRYNG message to end user device A, indicating that an attempt is being made to alert the user of end user device C. The return path between end user device C and end user device A may not include any one of or all of the edge router, the policy server, the authorization server, or the proxy server associated with end user device B, and end user device B might be under surveillance. However, because call signaling messages can be collected by the remaining proxies, a complete call record can still be obtained.

In line 8 of the call flow diagram, end user device C **802** transmits a RINGING message to end user device A indicating that end user B is being alerted at end user device C. In line 9 of the call flow diagram, when end user B answers the call at end user device C, end user device C transmits an OK message to end user device A. The OK message includes the media flow IP address, port number, and media stream decoding information for the incoming media flow for end user device C at which end user B is receiving calls. Accordingly, this information is preferably communicated to policy server **819** and to C edge router **822** to enable copying and decoding of the media stream to and from end user device C **802**.

In line 10 of the call flow diagram, end user device A **800** transmits an ACK message to end user device C. Once this occurs, media stream communications occur between end user device A **800** and end user B, who is located at end user device C **802**. Accordingly, the media stream flows through A edge router **821** and C edge router **822**. Because the edge routers have been notified that one or both of the end users are under surveillance, the edge routers can send copies of the media stream to recording device **812**. Thus, even when end user B receives calls at a terminal other than his or her "home" terminal, the methods and systems for performing IP network surveillance according to the present invention are capable of recording both call signaling and media stream information for forwarded calls.

### IP Network Surveillance for IP to PSTN Communications

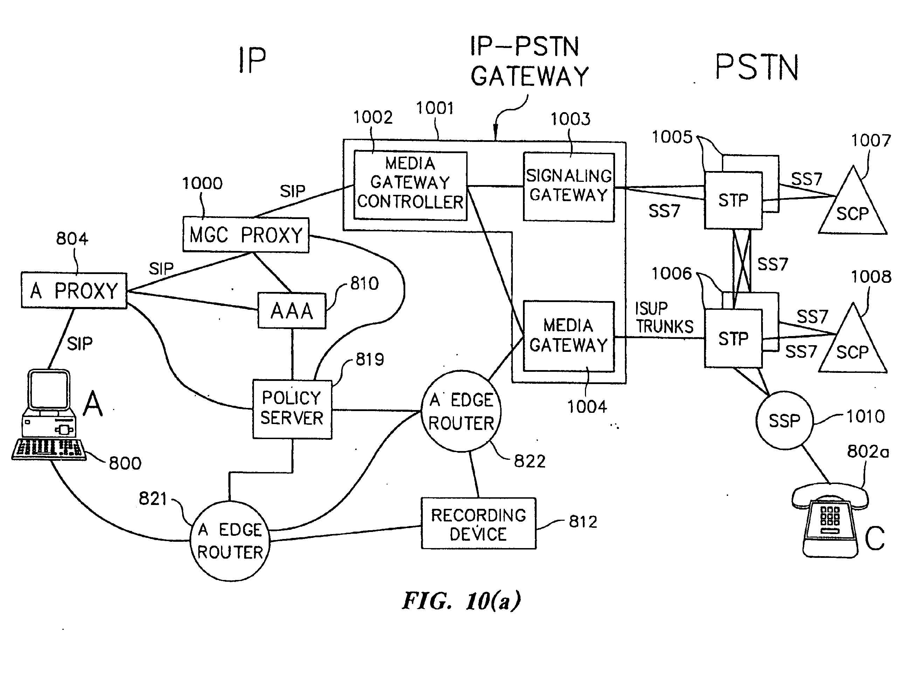

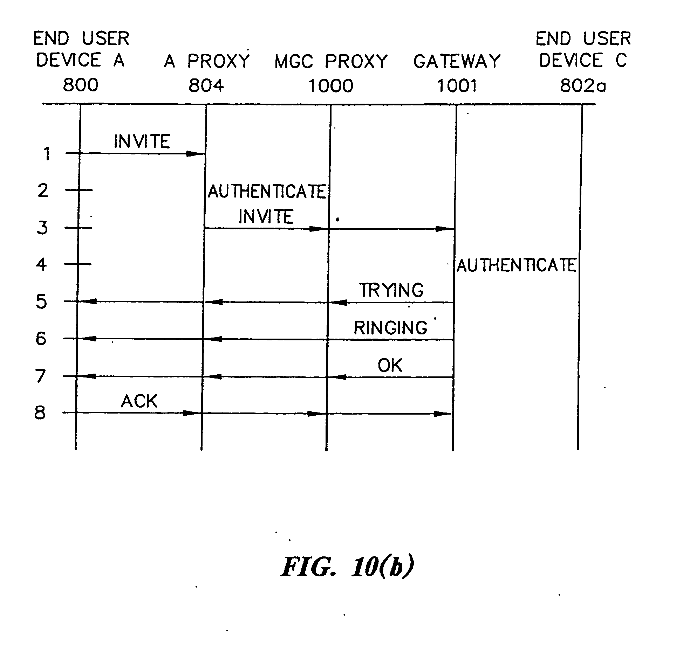

In addition to monitoring PSTN to IP and IP to IP communications, the methods and systems for performing IP network surveillance can also be used to perform surveillance for IP to PSTN calls. Figure 10(a) illustrates an exemplary operating environment in which user A **800** having an IP telephone attempts to call end user device C **802a** connected to a PSTN network. In the illustrated network diagram, end user device A **800**, A proxy **804**, authentication server **810**, policy-server **819**, and A edge router **821** are preferably the same as the corresponding elements described above and a description thereof is therefore not repeated herein.

MGC proxy **1000** communicates with A proxy **804** and with IP-PSTN gateway **1001** using SIP. IP-PSTN gateway **1001** includes media gateway controller **1002**, signaling gateway **1003**, and media gateway **1004**. Signaling gateway **1003**, media gateway **1004**, and media gateway controller **1002** are the same as the correspondingly named entities described with respect to Figure 2. Accordingly, a discussion of these entities is not repeated herein.

The PSTN network connected to end user device C includes mated pairs of signal transfer points (STPs) **1005** and **1006**, service control points (SCPs) **1007** and **1008** and SSP **1010** that communicate using the Signaling System 7 (SS7) protocol. The STPs **1005** and **1006** are switching elements that through-switch SS7 messages based on address information in the messages. SCPs **1007** and **1008** are database nodes that contain call processing information for certain types of calls, such as credit card calls. SSP establishes media communications between end user device **802a** and a remote end user device through a voice trunk.

Figure 10(b) is a call flow diagram illustrating a method for performing IP network surveillance in the network illustrated in Figure 10(a). In line 1 of the call flow diagram, end user device A **800** transmits an INVITE message to A proxy **804**. In line 2, A proxy **802** determines whether end user device A **800** or end user device C **802a** is under surveillance. The steps for determining whether the end user devices are under surveillance can be similar to those illustrated in Figure 7(c) for the PSTN to IP case. For example, first, A proxy **804** can send an authentication request to authentication server **810** (illustrated in Figure 10(a)). The request can include user identification information for end user device A and end user device C. Authentication server **810** can perform a lookup in a users-under-surveillance database based on the identification information. Authentication server **810** can then send a response to A proxy **804** indicating whether one or both of the end user devices are under surveillance. If A proxy **804** receives notification that either or both end user devices are under surveillance, A proxy **804** preferably sends copies of call signaling information between end user device A **800** and end user device C **802a** to recording device **812**. A proxy **804** preferably also notifies policy server **819** (illustrated in Figure 10(a)) that the end user devices are under surveillance, sends media stream identification information, and sends media stream decoding information to policy server **819** to trigger and enable copying of the media stream between end user device A **800** and end user device C **802a.**

In line 3 of the call flow diagram, A proxy **804** forwards the INVITE message to MGC proxy **1000**, which forwards the INVITE message to IP-PSTN gateway **1001**. In line 4 of the call flow diagram, MGC proxy **1000** can determine whether end user device A, end user device C, or both are under surveillance, in the same manner described above with respect to line 2 of the call flow diagram. In line 5 of the call flow diagram, end user IP-PSTN gateway transmits a TRYING message to end user device A, indicating that an attempt is being made to alert end user device C. In line 6 of the call flow diagram, IP-PSTN gateway **1001** transmits a RINGING message to end user device A indicating that end user device C **802a** is being alerted. In line 7 of the call flow diagram, when the user of end user device C answers the call, IP-PSTN gateway transmits an OK message to end user device A. The OK message includes the media flow IP address, port number, and media flow decoding information for the incoming media flow for end user device C. Accordingly, this information is preferably communicated to policy server **819** and to C edge router **822** to enable copying and decoding of the media stream to and from IP-PSTN gateway **1001**.

In line 8 of the call flow diagram, end user device A **800** transmits an ACK message to end user device C **802a**. Once this occurs, media stream communications occur between end user device A **800** and end user device C **802a** through edge routers **821** and **822**. Because the edge routers have been notified that one or both of the end users are under surveillance, the edge routers can send copies of the media stream to recording device **812**. Thus, the methods and systems for performing IP network surveillance also apply to IP-PSTN calls.

The present invention is not limited the method for performing IP network surveillance for an IP-PSTN telephone call described with respect to Figure 10(a). For example, in an alternative embodiment, when authentication server **810** indicates that either of the end user devices is under surveillance, authentication server can inform A proxy **804**. A proxy **804** can then transmit a signal to SSP **1010** to trigger recording of both call signaling and media stream information to and from end user device C. Recording can be performed in a conventional manner, for example, using a magnetic tape device.

### IP Network Surveillance for IP to IP Call Forwarded to a PSTN Terminal

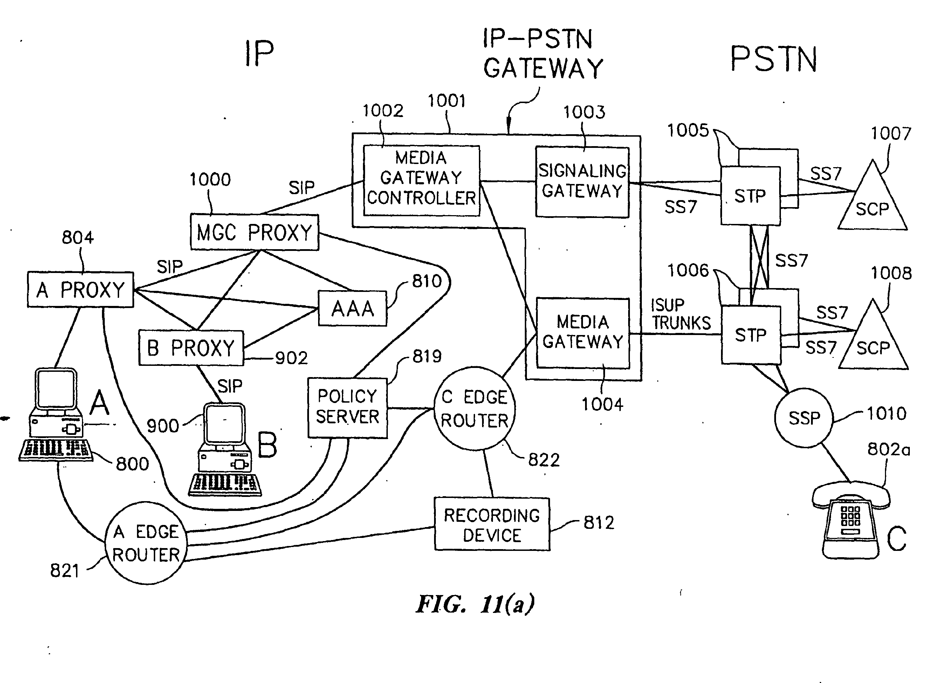

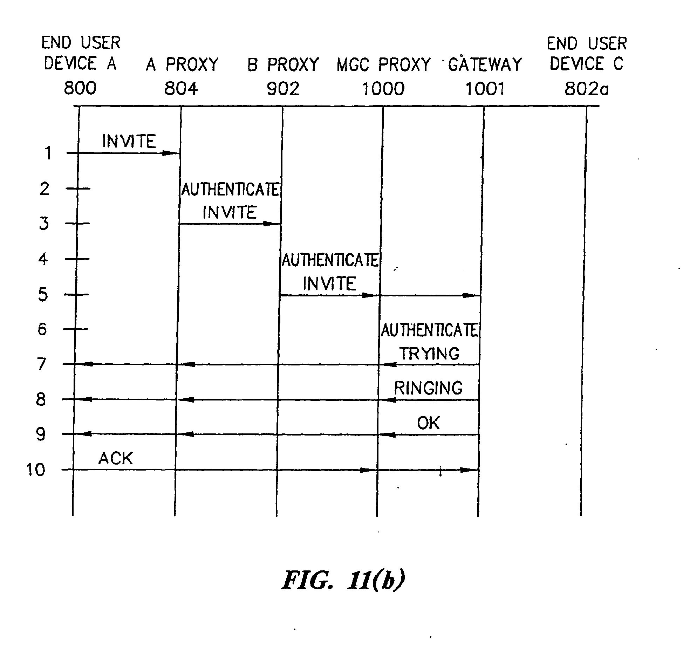

Figure 11(a) illustrates an exemplary operating environment for embodiments of the present invention in which an IP to IP call is forwarded to a PSTN terminal. In Figure 11(a), the network entities associated with end user device A and end user device C are the same as those described with respect to Figure 10(a). Hence, a description of these entities will not be repeated herein. End user device B and B proxy are the same as the corresponding entities described with respect to Figure 9(a). Hence, a description of these entities is likewise not repeated herein.

Figure 11 (b) is a call flow diagram illustrating a method for performing IP network surveillance in the operating environment illustrated in Figure 11(a). In line 1 of the call flow diagram, end user device A **800** transmits an INVITE message to A proxy **804**. In line 2, A proxy **804** determines whether end user device A **800** or end user device B **900** (illustrated in Figure 11(a)) is under surveillance. The steps for determining whether the end user devices are under surveillance can be similar to those illustrated in Figure 7(c) for the PSTN to IP case. For example, first, A proxy **804** can send an authentication request to authentication server **810** (illustrated in Figure 11 (a)). The request can include user identification information for end user device A and end user device B. Authentication server **810** can perform a lookup in the users-under-surveillance database based on the identification information. Authentication server **810** can then send a response to A proxy **804** indicating whether one or both of the end users are under surveillance. If A proxy **804** receives notification that either or both end users are under surveillance, A proxy **804** preferably sends copies of call signaling information between end user device A **800** and end user device B **900** to recording device **812**. A proxy **804** preferably also notifies policy server **819** that the end users are under surveillance, sends media stream identification information, and sends media stream decoding information to policy server **819** to trigger and enable copying of the media stream between end user device A **800** and end user device C **802a**.

In line 3 of the call flow diagram, A proxy **804** forwards the INVITE message to B proxy **902**. In line 4 of the call flow diagram, B proxy determines that calls directed to end user device B have been forwarded to another location. B proxy can also determine whether end user device A, end user device B, end user device C, or all three end users are under surveillance. Determining whether any of the end users is under surveillance can be accomplished in the same manner described above with respect to line 2 of the call flow diagram. In line 5 of the call flow diagram, B proxy forwards the INVITE message to MGC proxy **1000**, and MGC proxy forwards the INVITE message to gateway **1001**. In line 6 of the call flow diagram MGC proxy **1000** can determine whether end user device A, end user device B, or end user device C are under surveillance by communicating with authentication server **810** in the manner described above. If any of the end users are determined to be under surveillance, MGC proxy **1000** preferably also sends media stream identification and decoding information extracted from the INVITE message to policy server **819**. In line 7 of the call flow diagram, gateway **1001** transmits the TRYNG message to end user device A, indicating that an attempt is being made to alert end user B at end user device C. The return path between end user device C and end user device A may not include any one of or all of the edge router, policy server, authorization server, or proxy server associated with end user device B. However, because call signaling messages can be collected by the remaining proxies, a complete call signaling record can be obtained.

In line 8 of the call flow diagram, gateway **1001** transmits a RINGING message to end user device A indicating that the user at end user device C is being alerted. In line 9 of the call flow diagram, when end user B answers at end user device C, end gateway **1001** transmits an OK message to end user device A. The OK message includes the media flow IP address and port number and media flow decoding information for the incoming media flow for end user device C at which end user B is receiving calls. Accordingly, this information is preferably communicated to policy server **819** and to C edge router **822** to enable copying and decoding of the media stream to and from end user device C **802a**.

In line 10 of the call flow diagram, end user device A **800** transmits an ACK message to gateway **1001**. Once this occurs, media stream communications occur between end user device A **800** and end user device B, who is located at end user device C **802a**. Accordingly, the media stream flows through A edge router **821** (illustrated in Figure 11(a)) and C edge router **822** (illustrated in Figure 11(a)). Because edge routers **821** and **822** have been notified that one or both of the end users are under surveillance, edge routers **821** and **822** can send copies of the media stream to recording device **812**. Thus, even when end user B receives calls at a terminal other than his or her "home" terminal, the methods and systems for performing IP network surveillance according to the present invention are capable of recording both call signaling and media stream information for forwarded calls.

### Alternative Methods and Systems for Performing IP Network Surveillance

Although the methods and systems described above for performing IP network surveillance utilize user identification information, media stream identification information, and media stream decoding information extracted from call signaling messages in order to perform surveillance, the present invention is not limited to these embodiments. For example, in an alternative embodiment, the present invention can comprise a packet sniffer adapted to copy all message packets transmitted to or received from an end user under surveillance. A packet sniffer according to the present embodiment can be connected to the same network as the end user under surveillance. For example, the packet sniffer can have an Ethernet connection to the end user's local area network. Since the packet sniffer is physically connected to an Ethernet network, the packet sniffer can receive all messages transmitted to or from network entities on the network. In order to perform surveillance, the packet sniffer can record all messages directed to or from an end user under surveillance. These message can include both call signaling and media stream information. The packet sniffer can simply transmit copies of the messages to a recording device without processing the messages into call signaling or media stream sequences. The processing can be then be done by the recording device. Alternatively, the packet sniffer can assemble the call signaling and media stream information and send the assembled information to the recording device. Either method for processing the received messages is within the scope of the invention.

An alternative to Ethernet that can be used for packet sniffing is remote monitoring (RMON). RMON is conventionally used for network traffic analysis, but can be used for IP network surveillance. RMON probes process large amounts of data and require large amounts of storage space. This technology can be used for packet sniffing on a high bandwidth, e.g., faster than Ethernet, connection.

Additional monitoring software available on some LAN switches can be used for port monitoring from a VLAN perspective or perhaps the whole switch, but this monitoring is product specific. Accordingly, while it is technologically possible to perform surveillance via packet sniffing, such methods require either massive processing, storage, or product specific software. As a result, IP network surveillance through analysis of call signaling messages, as described above, is preferred.

Although the examples discussed above are directed primarily to performing surveillance of IP telephone calls, the present invention is not limited to such an embodiment. For example, the methods and systems described herein may be used to perform surveillance of video communications, data communications, such as e-mail communications and file downloads, and audio communications, other than voice telephone calls, that occur over an IP network.

The embodiments of the invention described above provide versatility in performing network surveillance when end users subscribe to different IP service providers. For example, a surveillance order may be issued to the service provider of one end user but not necessarily to the service providers of both end users. If the called party in an IP telephone call is the subject of surveillance, the only evidence of the surveillance may be the request for authentication transmitted by the proxy server to the authentication server of the end user under surveillance as described above. If the end user under surveillance has redirected to another location served by a different service provider, it may be necessary for the subject's proxy server to explicitly communicate this fact to an entity, e.g., a proxy server, an authentication server, a policy server, or other entity, in the originating and/or terminating network in which surveillance is required. For example, in the embodiments illustrated in Figures **9a - 11a**, only end user B's service provider may be aware of the surveillance order. There is no existing way that the calling end user, i.e., end user A, or the called end user, i.e., end user C, will be aware of the surveillance. One possible solution to this problem is to have the subject's proxy, e.g., B proxy **902** illustrated in Figure **9a**, upon determining that the origination point and the termination point is outside of the current server's network, may send a message to either or both end point proxies, informing them of the surveillance. This information is preferably not part of the communications signaling, since the end user may have access to the call signaling information. Alternatively, since the number of individuals under surveillance is relatively small, it is possible that every licensed service provider could have an exhaustive list of everyone under surveillance. Either possibility is within the scope of the invention.

It will be understood that various details of the invention can be changed without departing from the scope of the invention. Furthermore, the foregoing description is for the purpose of illustration only, and not for the purpose of limitation-the invention being defined by the claims.

## Claims

1. A method for performing internet protocol, IP, network surveillance **characterised by**:
a) receiving a first message indicating that an end user device (200) is under surveillance;
b) in response to receiving the first message, extracting media stream identification information from a call signaling message associated with the end user device (200); and
c) transmitting the media stream identification information to an edge router (212) associated with the end user device (200) to enable copying of a media stream identified by the media stream identification information.

2. The method of claim 1 wherein transmitting the media stream identification information to an edge router (212) comprises transmitting the media stream identification information to a policy server (214) and from the policy server (214) to the edge router (212).

3. The method of claim 1 wherein the media stream identification information includes an internet protocol, IP, address and port number at which the end user or end user device (200) receives the media stream identified by the media stream identification information.

4. The method of claim 1 comprising, in response to receiving the first message, copying call signaling messages associated with the end user device (200) and sending copies of the call signaling messages to a recording device (210).

5. The method of claim 1 comprising, in response to receiving the first message, extracting, from the call signaling message, media stream decoding information for decoding the media stream.

6. The method of claim 5 comprising forwarding the media steam decoding information to a recording device (210) to enable decoding of the media stream.

7. The method of claim 1 wherein extracting media stream identification information from the call signaling message includes extracting the media stream identification information from a session initiation protocol, SIP, message associated with the end user device (200).

8. The method of claim 7 wherein extracting the media stream identification information from a SIP message comprises extracting the media stream identification information from a session description protocol, SDP, portion of the message.

9. The method of claim 7 wherein extracting the media stream identification information from a SIP message comprises extracting the media stream identification information from an INVITE message.

10. The method of claim 7 wherein extracting the media stream identification information from a SIP message comprises extracting the media stream identification information from an OK message.

11. The method of claim 5 wherein extracting the media stream decoding information from the call signaling message includes extracting the media stream decoding information from a session initiation protocol, SIP, message associated with the end user device (200).

12. The method of claim 11 wherein extracting the media stream decoding information from a SIP message comprises extracting the media stream decoding information from a session description protocol, SDP, portion of the message.

13. The method of claim 11 wherein extracting the media stream decoding information from a SIP message comprises extracting the media stream decoding information from an INVITE message.

14. The method of claim 11 wherein extracting the media stream decoding information from a SIP message comprises extracting the media stream decoding information from an OK message.

15. The method of claim 1, further comprising:
at a proxy server (206),
a) receiving call signaling information from the end user device (200);
b) transmitting, from the proxy server (206) to an authentication server (208), authentication information for the end user device (200); at the authentication server (208),
c) determining whether the end user device (200) is under surveillance based on the authentication information;
d) in response to determining that the end user device (200) is under surveillance, notifying the proxy server (206) with the first message that the end user device (200) is under surveillance; and
at the proxy server (206),
e) in response to receiving the first message that the end user device (200) is under surveillance, copying the call signaling information associated with the end user device (200).

16. The method of claim 15 wherein step c) comprises determining whether a called party device is under surveillance.

17. The method of claim 15 wherein step c) comprises determining whether a calling party device is under surveillance.

18. The method of claim 15, comprising:
at the proxy server (206),
f) forwarding a copy of the call signaling information to a recording device (210).

19. The method of claim 18, comprising:
at the proxy server (206), performing the extracting of the media stream identification information and the transmitting of the media stream identification information to the edge router (212).

20. The method of claim 19, comprising:
at the edge router (212),
i) identifying a media stream directed to or transmitted from the end user device (200) based on the media stream identification information; and
j) copying the media stream.

21. The method of claim 20, comprising forwarding a copy of the media stream to a recording device (210).

22. The method of claim 15, wherein extracting media stream identification information comprises extracting an internet protocol, IP, address and port number for the end user device (200).

23. The method of claim 1, further comprising:
at a proxy server (206) in a first network managed by a first service provider,
a) receiving call signaling information for a call to or from the end user device (200);
b) transmitting, from the proxy server (206) to an authentication server (208), authentication information for the end user device (200); at the authentication server (208).
c) determining whether the end user device (200) is under surveillance based on the authentication information;
d) in response to determining that the end user device (200) is under surveillance, notifying the proxy server (206) that the end user device (200) is under surveillance; at the proxy server (206),
e) in response to receiving notification that the end user device (200) is under surveillance, determining whether end points of a call to or from the end user device (200) are within the first network: and
f) in response to determining that the end points are not within the first network, notifying an entity in a second network managed by a second service provider that the end user device (200) is under surveillance.

24. The method of claim 23 wherein notifying a second entity includes notifying a proxy server (712) in the second network.

25. The method of claim 23 wherein notifying an entity in a second network includes notifying an authentication server (708) in the second network.

26. The method of claim 23 wherein notifying an entity in the second network includes notifying a policy server (716) in the second network.

27. A system for performing internet protocol, IP. network surveillance **characterised by**:
a) a first server having a users-under-surveillance database (412) containing information indicating whether an end user device (200) is under surveillance and a surveillance processor (410) for accessing the users-under-surveillance database (412) to determine whether the end user device (200) is under surveillance; and
b) a second server including a multimedia session controller (310) for controlling multimedia communication sessions between the end user and other end users and a surveillance interface (312) for communicating with the first server to determine whether the end user device is under surveillance
wherein the second server is adapted to extract media stream identification information from a call signaling message and wherein the second server is further adapted to transmit the media stream identification information to an edge router (212) to enable copying of a media stream identified by the media stream identification information.

28. The system of claim 27 wherein the first server is an authentication server (208) and the second server is a proxy server (206).

29. The system of claim 28 wherein the proxy server (206) includes a call signaling message processor (314) for forwarding copies of call signaling messages to a recording device (210) when the authentication server (208) indicates that the end user device (200) is under surveillance.

30. The system of claim 29 wherein the call signaling message processor (314) is adapted to extract the media stream identification from at least one of the call signaling messages for identifying a media stream associated with the end user device (200).

31. The system of claim 29 wherein the call signaling message processor (314) is adapted to extract the media stream identification information from at least one session initiation protocol SIP message associated with the end user device (200).

32. The system of claim 31 wherein the call signaling message processor (314) is adapted to extract the media stream identification information from a session description protocol SDP portion of the SIP message.

33. The system of claim 29 wherein the call signaling message processor (314) is adapted to extract the media stream identification information from an INVITE message associated with the end user device (200).

34. The system of claim 29 wherein the call signaling message processor (314) is adapted to extract the media stream identification information from an OK message associated with the end user device (200).

35. The system of claim 29 wherein the call signaling message processor(314) is adapted to extract first media stream identification information for a first end user device (700) from an INVITE message transmitted from the first end user device (700) and to extract second media stream identification for a second end user device (702) from an OK message transmitted from the second end user device (702).

36. The system of claim 35 wherein the first end user device (700) is an IP communications device and the second end user device (702) is an IP communications device.

37. The system of claim 35 wherein the first end user device (700) is an IP communications device and the second end user device (702) is a public switched telephone network PSTN communications device.

38. The system of claim 27 wherein the media stream identification information includes an IP address and port number for the end user device (200).

39. The system of claim 29 wherein the call signaling message processor (314) is adapted to extract media stream decoding information from at least one of the call signaling messages for decoding a media stream associated with the end user device (200).

40. The system of claim 29 wherein the call signaling message processor (314) is adapted to extract the media stream decoding information from at least one session initiation protocol SIP message associated with the end user device (200).

41. The system of claim 40 wherein the call signaling message processor (314) is adapted to extract the media stream decoding information from a session description protocol, SDP, portion of the SIP message.

42. The system of claim 29 wherein the call signaling message processor (314) is adapted to extract the media stream decoding information from an INVITE message associated with the end user device (200).

43. The system of claim 29 wherein the call signaling message processor (314) is adapted to extract the media stream decoding information from an OK message associated with the end user device (200).

44. The system of claim 29 wherein the call signaling message processor (314) is adapted to extract first media stream decoding information for a first end user device (700) from an INVITE message transmitted from the first end user device (700) and to extract second media stream decoding information for a second end user device (702) from an OK message transmitted from the second end user device (702).

45. The system of claim 44 wherein the first end user device (700) is an IP communications device and the second end user device (702) is an IP communications device.

46. The system of claim 44 wherein the first end user device (700) is an IP communications device and the second end user device (702) is a public switched telephone network PSTN communications device.

47. A computer program product comprising computer-executable instructions embodied in a computer readable medium for performing steps **characterised by**:
a) receiving a packet based call signaling message transmitted from an end user device (200) through a packet based communication network;
b) extracting end user identification information from the call signaling message;
c) transmitting the end user identification information to an authentication server (208) to determine whether the end user device (200) is under surveillance; and
d) in response to receiving notification that the end user device (200) is under surveillance, copying call signaling messages associated with the end user device (200).

48. The computer program product of claim 47 comprising, in response to receiving notification that the end user is under surveillance, extracting media stream identification information from the call signaling message.

49. The computer program product of claim 48 wherein extracting media stream identification information comprises extracting media stream identification information from a session initiation protocol, SIP, message.

50. The computer program product of claim 49 wherein extracting media stream identification information comprises extracting media stream identification information from a session description protocol, SDP, portion of the SIP message.

51. The computer program product of claim 48 wherein extracting media stream identification information comprises extracting media stream identification information from an INVITE message.

52. The computer program product of claim 48 wherein extracting media stream identification information comprises extracting media stream identification information from an OK message.

53. The computer program product of claim 48 wherein extracting the media stream identification information includes extracting an IP address and port number for the end user device (200).

54. The computer program product of claim 47 comprising, in response to receiving notification that the end user device (200) is under surveillance, extracting media stream decoding information from at least one of the call signaling messages for decoding a media stream associated with the end user device (200).

55. The computer program product of claim 54 wherein extracting the media stream decoding information comprises extracting the media stream decoding information from at least one session initiation protocol, SIP, message associated with the end user device (200).

56. The computer program product of claim 55 wherein extracting the media stream decoding information from at least one SIP message comprises extracting the media stream decoding information from a session description protocol, SDP, portion of the SIP message.

57. The computer program product of claim 54 wherein extracting the media stream decoding information comprises extracting the media stream decoding information from an INVITE message associated with the end user device.

58. The computer program product of claim 54 wherein extracting the media stream decoding information comprises extracting the media stream decoding information from an OK message associated with the end user device.

## Patentansprüche

1. Verfahren zur Durchführung einer Internetprotokoll-, IP-, Netzwerk-Überwachung, **gekennzeichnet durch**:
a) Empfangen einer ersten Mitteilung, die anzeigt, dass ein Endbenutzergerät (200) unter Überwachung steht;
b) als Antwort auf den Empfang der ersten Mitteilung. Ableiten von Medienstrom-Identifikations-Information aus einer Anruf-Signalisierungs-Mitteilung, die dem Endbenutzergerät (200) zugeordnet ist; und
c) Senden der Medienstrom-Identifikations-Information an einen Rand-Router (212), der dem Endbenutzergerät (200) zugeordnet ist, um ein Kopieren des Medienstroms zu ermöglichen, der **durch** die Medienstrom-Identifikations-Information identifiziert ist.

2. Verfahren nach Anspruch 1, bei dem das Senden der Medienstrom-Identifikations-Information an einen Rand-Router (212) das Senden der Medienstrom-Identifikations-Information an einen Richtlinien-Server (214) und von dem Richtlinien-Server (214) an den Rand-Router (212) umfasst.

3. Verfahren nach Anspruch 1, bei dem die Medienstrom-Identifikations-Information eine Internetprotokoll-, IP-, Adresse- und Port-Nummer einschließt, an der der Endbenutzer oder das Endbenutzergerät (200) den durch die Medienstrom-Identifikations-Information identifizierten Medienstrom empfängt.

4. Verfahren nach Anspruch 1, das als Antwort auf den Empfang der ersten Mitteilung das Kopieren von dem Endbenutzergerät (200) zugeordneten Anruf-Signalisierungs-Mitteilungen und das Senden der Kopien der Anruf-Signalisierungs-Mitteilungen an ein Aufzeichnungsgerät (210) umfasst.

5. Verfahren nach Anspruch 1, das als Antwort auf den Empfang der ersten Mitteilung die Ableitung von Medienstrom-Decodierungs-Information zum Decodieren des Medienstroms aus der Anruf-Signalisierungs-Mitteilung umfasst.

6. Verfahren nach Anspruch 5, das die Weiterleitung der Medienstrom-Decodierungs-Information an ein Aufzeichnungsgerät (210) umfasst, um die Decodierung des Medienstroms zu ermöglichen.

7. Verfahren nach Anspruch 1, bei dem die Ableitung der Medienstrom-Identifikations-Information aus der Anruf-Signalisierungs-Mitteilung die Ableitung der Medienstrom-Identifikations-Information aus einer Sitzungs-Initialisierungsprotokoll-, SIP-, Mitteilung einschließt, die dem Endbenutzergerät (200) zugeordnet ist.

8. Verfahren nach Anspruch 7, bei dem das Ableiten der Medienstrom-Identifikations-Information aus einer SIP-Mitteilung die Ableitung der Medienstrom-Identifikations-Information aus einem Sitzungs-Beschreibungsprotokoll-, SDP-, Teil der Mitteilung umfasst.

9. Verfahren nach Anspruch 7, bei dem die Ableitung der Medienstrom-Identifikations-Information aus einer SIP-Mitteilung die Ableitung der Medienstrom-Identifikations-Information aus einer INVITE- (Einladungs-) Mitteilung umfasst.

10. Verfahren nach Anspruch 7, bei dem die Ableitung der Medienstrom-Identifikations-Information aus einer SIP-Mitteilung die Ableitung der Medienstrom-Identifikations-Information aus einer OK-Mitteilung umfasst.

11. Verfahren nach Anspruch 5, bei dem die Ableitung der Medienstrom-Decodierungs-Information aus der Anruf-Signalisierungs-Mitteilung die Ableitung der Medienstrom-Decodierungs-Information aus einer Sitzungs-Initialisierungs-Protokoll-, SIP-, Mitteilung einschließt, die dem Endbenutzergerät (200) zugeordnet ist.

12. Verfahren nach Anspruch 11, bei dem die Ableitung der Medienstrom-Decodierungs-Information aus einer SIP-Mitteilung die Ableitung der Medienstrom-Decodierungs-Information aus einem Sitzungs-Beschreibungsprotokoll-, SDP-, Teil der Mitteilung umfasst.

13. Verfahren nach Anspruch 11, bei dem die Ableitung der Medienstrom-Decodierungs-Information aus einer SIP-Mitteilung die Ableitung der Medienstrom-Decodierungs-Information aus einer INVITE- (Einladungs-) Mitteilung umfasst.

14. Verfahren nach Anspruch 11, bei dem die Ableitung der Medienstrom-Decodierungs-Information aus einer SIP-Mitteilung die Ableitung der Medienstrom-Decodierungs-Information aus einer OK-Mitteilung umfasst.

15. Verfahren nach Anspruch 1, das weiterhin Folgendes umfasst:
an einem Proxy-Server (206),
a) Empfangen von Anruf-Signalisierungs-Information von dem Endbenutzergerät (200);
b) Senden von Authentifizierungs-Information für das Endbenutzergerät (200) von dem Proxy-Server (206) an einen Authentifizierungs-Server (208):
an dem Authentifizierungs-Server (208),
c) Feststellen, ob das Endbenutzergerät (200) unter Überwachung steht, auf der Grundlage der Authentifizierungs-Information;
d) als Antwort auf die Feststellung, dass das Endbenutzergerät
(200) unter Überwachung steht, Benachrichtigen des Proxy-Servers (206) mit der ersten Mitteilung, dass das Endbenutzergerät (200) unter Überwachung steht; und an dem Proxy-Server (206).
e) als Antwort auf den Empfang der ersten Mitteilung, dass das Endbenutzergerät (200) unter Überwachung steht, Kopieren
der Anruf-Signalisierungs-Information, die dem Endbenutzergerät (200) zugeordnet ist.

16. Verfahren nach Anspruch 15, bei dem der Schritt c) die Feststellung umfasst, ob das Gerät eines angerufenen Teilnehmers unter Überwachung steht.

17. Verfahren nach Anspruch 15, bei dem der Schritt c) die Feststellung umfasst, ob das Gerät eines anrufenden Teilnehmers unter Überwachung steht.

18. Verfahren nach Anspruch 15, das Folgendes umfasst:
an dem Proxy-Server (206),
f) Weiterleiten einer Kopie der Anruf-Signalisierungs-Information an ein Aufzeichnungsgerät (210).

19. Verfahren nach Anspruch 18, das Folgendes umfasst:
an dem Proxy-Server (206), Durchführen der Ableitung der Medienstrom-Identifikations-Information und Senden der Medienstrom-Identifikations-Information an den Rand-Router (212).

20. Verfahren nach Anspruch 19, das Folgendes umfasst:
an dem Rand-Router (212),
i) Identifizieren eines Medienstroms, der an das Endbenutzergerät (200) gerichtet oder von diesem ausgesandt wird, auf der Grundlage der Medienstrom-Identifikations-Information; und
j) Kopieren des Medienstroms.

21. Verfahren nach Anspruch 20, das die Weiterleitung einer Kopie des Medienstroms an ein Aufzeichnungsgerät (210) umfasst.

22. Verfahren nach Anspruch 15, bei dem die Ableitung der Medienstrom-Identifikations-Information die Ableitung einer Internetprotokoll-, IP-, Adresse und Pfad-Nummer für das Endbenutzergerät (200) umfasst.

23. Verfahren nach Anspruch 1, das weiterhin Folgendes umfasst:
an einem Proxy-Server (206) in einem ersten Netzwerk, das von einem
ersten Diensteanbieter verwaltet wird,
a) Empfangen von Anruf-Signalisierungs-Information für einen Anruf an oder von dem Endbenutzergerät (200);
b) Senden von Authentifizierungs-Information für das Endbenutzergerät (200) von dem Proxy-Server (206) an einen Authentifizierungs-Server (208),
an dem Authentifizierungs-Server (208),
c) Feststellen, ob das Endbenutzergerät (200) unter Überwachung steht, auf der Grundlage der AuthentifizierungsInformation;
d) als Antwort auf die Feststellung, dass das Endbenutzergerät (200) unter Überwachung steht, Benachrichtigen des Proxy-Servers (206), dass das Endbenutzergerät (200) unter Überwachung steht;
an dem Proxy-Server (206).
e) als Antwort auf den Empfang der Benachrichtigung, dass das Endbenutzergerät (200) unter Überwachung steht, Feststellen, ob Endpunkte eines Anrufs zu oder von dem Endbenutzergerät (200) innerhalb des ersten Netzwerkes liegen; und
f) als Antwort auf die Feststellung, dass die Endpunkte nicht innerhalb des ersten Netzwerkes liegen, Benachrichtigen einer Einheit in einem zweiten Netzwerk, das von einem zweiten Diensteanbieter verwaltet wird, dass das Endbenutzergerät (200) unter Überwachung steht.

24. Verfahren nach Anspruch 23, bei dem die Benachrichtigung der zweiten Einheit die Benachrichtigung eines Proxy-Servers (712) in dem zweiten Netzwerk einschließt.

25. Verfahren nach Anspruch 23, bei dem die Benachrichtigung einer Einheit in einem zweiten Netzwerk die Benachrichtigung eines Authentifizierungs-Servers (708) in dem zweiten Netzwerk einschließt.

26. Verfahren nach Anspruch 23, bei dem die Benachrichtigung einer Einheit in dem zweiten Netzwerk die Benachrichtigung eines Richtlinien-Servers (716) in dem zweiten Netzwerk einschließt.

27. System zur Durchführung einer Internetprotokoll-, IP-, Netzwerk-Überwachung, **gekennzeichnet durch**:
a) einen ersten Server, der eine Datenbank (412) für unter Überwachung stehende Benutzer aufweist, die Information enthält, ob ein Endbenutzergerät (200) unter Überwachung steht, und einen Überwachungs-Prozessor (410) zur Durchführung eines Zugriffs auf die Datenbank (412) für unter Überwachung stehende Benutzer, um festzustellen, ob das Endbenutzergerät (200) unter Überwachung steht; und
b) einen zweiten Server, der eine Multimedien-Sitzungs-Steuerung (310) zur Steuerung von Multimedien-Kommunikations-Sitzungen zwischen dem Endbenutzer und anderen Endbenutzern und eine Überwachungs-Schnittstelle (312) zur Kommunikation mit dem ersten Server einschließt, um festzustellen, ob das Endbenutzergerät unter Überwachung steht,
wobei der zweite Server zur Ableitung von Medienstrom-Identifikations-Information aus einer Anruf-Signalisierungs-Mitteilung ausgebildet ist, und wobei der zweite Server weiterhin so ausgebildet ist, dass er die Medienstrom-Identifikations-Information an einen Rand-Router (212) sendet, um ein Kopieren eines Medienstroms zu ermöglichen, der **durch** die Medienstrom-Identifikations-Information identifiziert ist.

28. System nach Anspruch 27, bei dem der erste Server ein Authentifizierungs-Server (208) ist und der zweite Server ein Proxy-Server (206) ist.

29. System nach Anspruch 28, bei dem der Proxy-Server (206) einen Anruf-Signalisierungs-Mitteilungs-Prozessor (314) zur Weiterleitung von Kopien von Anruf-Signalisierungs-Mitteilungen an ein Aufzeichnungsgerät (210) einschließt, wenn der Authentifizierungs-Server (208) anzeigt, dass das Endbenutzergerät (200) unter Überwachung steht.

30. System nach Anspruch 29, bei dem der Anruf-Signalisierungs-Mitteilungs-Prozessor (314) so ausgebildet ist, dass er die Medienstrom-Identifikation von zumindest einer der Anruf-Signalisierungs-Mitteilungen ableitet, um einen dem Endbenutzergerät (200) zugeordneten Medienstrom zu identifizieren.

31. System nach Anspruch 29, bei dem der Anruf-Signalisierungs-Mitteilungs-Prozessor (314) so ausgebildet ist, dass er die Medienstrom-Identifikations-Information aus zumindest einer Sitzungs-Initialisierungs-Protokoll-, SIP-, Mitteilung ableitet, die dem Endbenutzergerät (200) zugeordnet ist.

32. System nach Anspruch 31, bei dem der Anruf-Signalisierungs-Mitteilungs-Prozessor (314) zur Ableitung der Medieristrom-Identifikations-Information aus einem Sitzungs-Beschreibungs-Protokoll, SDP-, Teil der SIP-Mitteilung ausgebildet ist.

33. System nach Anspruch 29, bei dem der Anruf-Signalisierungs-Mitteilungs-Prozessor (314) zur Ableitung der Medienstrom-Identifikations-Information aus einer INVITE- (Einladungs-) Mitteilung ausgebildet ist, die dem Endbenutzergerät (200) zugeordnet ist.

34. System nach Anspruch 29, bei dem der Anruf-Signalisierungs-Mitteilungs-Prozessor (314) zur Ableitung der Medienstrom-Identifikations-Information aus einer OK-Mitteilung ausgebildet ist, die dem Endbenutzergerät (200) zugeordnet ist.

35. System nach Anspruch 29, bei dem der Anruf-Signalisierungs-Mitteilungs-Prozessor (314) zur Ableitung einer ersten Medienstrom-Identifikations-Information für ein erstes Endbenutzergerät (700) aus einer INVITE- (Einladungs-) Mitteilung, die von dem ersten Endbenutzergerät (700) ausgesandt wird, und zur Ableitung einer zweiten Medienstrom-Identifikations-Information für ein zweites Endbenutzergerät (702) aus einer OK-Mitteilung ausgebildet ist, die von dem zweiten Endbenutzergerät (702) ausgesandt wird.

36. System nach Anspruch 35, bei dem das erste Endbenutzergerät (700) ein IP-Kommunikationsgerät ist, und das zweite Endbenutzergerät (702) ein IP-Kommunikationsgerät ist.

37. System nach Anspruch 35, bei dem das erste Endbenutzergerät (700) ein IP-Kommunikationsgerät ist, und bei dem das zweite Endbenutzergerät (702) ein Kommunikationsgerät eines öffentlichen FemsprechwähInetzes, PSTN, ist.

38. System nach Anspruch 27, bei dem die Medienstrom-Identifikations-Information eine IP-Adresse und eine Port-Nummer für das Endbenutzergerät (200) einschließt.

39. System nach Anspruch 29, bei dem der Anruf-Signalisierungs-Mitteilungs-Prozessor (314) zur Ableitung von Medienstrom-Decodierungs-Information aus zumindest einer der Anruf-Signalisierungs-Mitteilungen zur Decodierung eines Medienstroms ausgebildet ist, der dem Endbenutzergerät (200) zugeordnet ist.

40. System nach Anspruch 29, bei dem der Anruf-Signalisierungs-Mitteilungs-Prozessor (314) zur Ableitung der Medienstrom-Decodierungs-Information aus zumindest einer Sitzungs-Initialisierungsprotokoll-, SIP-, Mitteilung ausgebildet ist, die dem Endbenutzergerät (200) zugeordnet ist.

41. System nach Anspruch 40, bei dem der Anruf-Signalisierungs-Mitteilungs-Prozessor (314) zur Ableitung der Medienstrom-Decodierungs-Information aus einem Sitzungs-Beschreibungsprotokoll-, SDP-, Teil der SIP-Mitteilung ausgebildet ist.

42. System nach Anspruch 29, bei dem der Anruf-Signalisierungs-Mitteilungs-Prozessor (314) zur Ableitung der Medienstrom-Decodierungs-Information aus einer INVITE- (Einladungs-) Mitteilung ausgebildet ist, die dem Endbenutzergerät (200) zugeordnet ist.

43. System nach Anspruch 29, bei dem der Anruf-Signalisierungs-Mitteilungs-Prozessor (314) zur Ableitung der Medienstrom-Decodierungs-Information aus einer OK-Mitteilung ausgebildet ist, die dem Endbenutzergerät (200) zugeordnet ist.

44. System nach Anspruch 29, bei dem der Anruf-Signalisierungs-Mitteilungs-Prozessor (314) zur Ableitung einer ersten Medienstrom-Decodierungs-Information für ein erstes Endbenutzergerät (700) aus einer INVITE- (Einladungs-) Mitteilung, die von dem ersten Endbenutzergerät (700) ausgesandt wird, und zur Ableitung einer zweiten Medienstrom-Decodierungs-Information für ein zweites Endbenutzergerät (702) aus einer OK-Mitteilung ausgebildet ist, die von dem zweiten Endbenutzergerät (702) ausgesandt wird.

45. System nach Anspruch 44, bei dem das erste Endbenutzergerät (700) ein IP-Kommunikationsgerät ist und das zweite Endbenutzergerät (702) ein IP-Kommunikationsgerät ist.

46. System nach Anspruch 44, bei dem das erste Endbenutzergerät (700) ein IP-Kommunikationsgerät ist und das zweite Endbenutzergerät (702) ein Kommunikationsgerät des öffentlichen Fernsprechwählnetzes, PSTN, ist.

47. Computerprogramm-Produkt, das von einem Computer ausführbare Befehle umfasst, die auf einem Computer-lesbaren Medium verkörpert sind, um Schritte auszuführen, die durch Folgendes **gekennzeichnet** sind:
a) Empfangen einer paketbasierten Anruf-Signalisierungs-Mitteilung, die von einem Endbenutzergerät (200) über ein paketbasiertes Kommunikations-Netzwerk ausgesandt wird;
b) Ableiten einer Endbenutzer-Identifikations-Information aus der Anruf-Signalisierungs-Mitteilung;
c) Aussenden der Endbenutzer-Identifikations-Information an einen Authentifizierungs-Server (208) zur Feststellung, ob das Endbenutzergerät (200) unter Überwachung steht; und
d) als Antwort auf den Empfang einer Benachrichtigung, dass das Endbenutzergerät (200) unter Überwachung steht. Kopieren von Anruf-Signalisierungs-Mitteilungen, die dem Endbenutzergerät (200) zugeordnet sind.

48. Computerprogramm-Produkt nach Anspruch 47, das als Antwort auf den Empfang einer Benachrichtigung, dass der Endbenutzer unter Überwachung steht, die Ableitung von Medienstrom-Identifikations-Information aus der Anruf-Signalisierungs-Mitteilung umfasst.

49. Computerprogramm-Produkt nach Anspruch 48, bei dem das Ableiten von Medienstrom-Identifikations-Information das Ableiten von Medienstrom-Identifikations-Information aus einer Sitzungs-Initialisierungsprotokoll-, SIP-, Mitteilung umfasst.

50. Computerprogramm-Produkt nach Anspruch 49, bei dem das Ableiten von Medienstrom-Identifikations-Information das Ableiten von Medienstrom-Identifikations-Information aus einem Sitzungs-Beschreibungsprotokoll-, SDP-, Teil der SIP-Mitteilung umfasst.

51. Computerprogramm-Produkt nach Anspruch 48, bei dem die Ableitung der Medienstrom-Identifikations-Information das Ableiten der Medienstrom-Identifikations-Information aus einer INVITE- (Einladungs-) Mitteilung umfasst.

52. Computerprogramm-Produkt nach Anspruch 48, bei dem die Ableitung der Medienstrom-Identifikations-Information die Ableitung von Medienstrom-Identifikations-Information aus einer OK-Mitteilung umfasst.

53. Computerprogramm-Produkt nach Anspruch 48, bei dem das Ableiten der Medienstrom-Identifikations-Information das Ableiten einer IP-Adresse und einer Port-Nummer für das Endbenutzergerät (200) einschließt.

54. Computerprogramm-Produkt nach Anspruch 47, das als Antwort auf den Empfang einer Benachrichtigung, dass das Endbenutzergerät (200) unter Überwachung steht, das Ableiten einer Medienstrom-Decodierungs-Information aus zumindest einer der Anruf-Signalisierungs-Mitteilungen zum Decodieren eines Medienstroms umfasst, der dem Endbenutzergerät (200) zugeordnet ist.

55. Computerprogramm-Produkt nach Anspruch 54, bei dem das Ableiten der Medienstrom-Decodierungs-Information die Ableitung der Medienstrom-Decodierungs-Information aus zumindest einer Sitzungs-Initialisierungsprotokoll-, SIP-, Mitteilung umfasst, die dem Endbenutzergerät (200) zugeordnet ist.

56. Computerprogramm-Produkt nach Anspruch 55, bei dem das Ableiten der Medienstrom-Decodierungs-Information aus zumindest einer SIP-Mitteilung das Ableiten der Medienstrom-Decodierungs-Information aus einem Sitzungs-Beschreibungsprotokoll-, SDP-, Teil der SIP-Mitteilung umfasst.

57. Computerprogramm-Produkt nach Anspruch 54, bei dem das Ableiten der Medienstrom-Decodierungs-Information das Ableiten der Medienstrom-Decodierungs-Information aus einer INVITE- (Einladungs-) Mitteilung umfasst, die dem Endbenutzergerät zugeordnet ist.

58. Computerprogramm-Produkt nach Anspruch 54, bei dem die Ableitung der Medienstrom-Decodierungs-Information die Ableitung der Medienstrom-Decodierungs-Information aus einer OK-Mitteilung umfasst, die dem Endbenutzergerät zugeordnet ist.

## Revendications

1. Procédé de surveillance d'un réseau à protocole Internet, IP, **caractérisé par** les étapes consistant à :
(a) recevoir un premier message indiquant qu'un dispositif de l'utilisateur final (200) est sous surveillance ;
(b) en réponse à la réception du premier message, extraire des informations d'identification de flux média d'un message de signalisation d'appel associé au dispositif de l'utilisateur final (200) ; et
(c) transmettre les informations d'identification de flux média à un routeur périphérique (212) associé au dispositif de l'utilisateur final (200) afin de permettre la copie d'un flux média identifié par les informations d'identification de flux média.

2. Procédé selon la revendication 1, dans lequel la transmission des informations d'identification de flux média à un routeur périphérique (212) comprend la transmission des informations d'identification de flux média à un serveur de règles (214) et du serveur de règles (214) au routeur périphérique (212).

3. Procédé selon la revendication 1, dans lequel les informations d'identification de flux média comprennent une adresse et un numéro de port de protocole Internet, IP, sur lesquels l'utilisateur final ou le dispositif de l'utilisateur final (200) reçoit le flux média identifié par les informations d'identification de flux média.

4. Procédé selon la revendication 1 comprenant, en réponse à la réception du premier message, les étapes consistant à copier les messages de signalisation d'appel associés au dispositif de l'utilisateur final (200) et à envoyer les copies des messages de signalisation d'appel à un dispositif d'enregistrement (210).

5. Procédé selon la revendication 1, comprenant, en réponse à la réception du premier message, l'étape consistant à extraire, du message de signalisation d'appel, des informations de décodage de flux média pour décoder le flux média.

6. Procédé selon la revendication 5, comprenant l'étape consistant à transmettre les informations de décodage de flux média à un dispositif d'enregistrement (210) pour permettre le décodage du flux média.

7. Procédé selon la revendication 1, dans lequel l'extraction d'informations d'identification de flux média du message de signalisation d'appel comprend l'extraction des informations d'identification de flux média d'un message de protocole d'initiation de session, SIP, associé au dispositif de l'utilisateur final (200).

8. Procédé selon la revendication 7, dans lequel l'extraction des informations d'identification de flux média d'un message SIP comprend l'extraction des informations d'identification de flux média du protocole de description de session, SDP, partie du message.

9. Procédé selon la revendication 7, dans lequel l'extraction des informations d'identification de flux média d'un message SIP comprend l'extraction des informations d'identification de flux média d'un message INVITE.

10. Procédé selon la revendication 7, dans lequel l'extraction des informations d'identification de flux média d'un message SIP comprend l'extraction des informations d'identification de flux média d'un message OK.

11. Procédé selon la revendication 5, dans lequel l'extraction des informations de décodage de flux média du message de signalisation d'appel comprend l'extraction des informations de décodage de flux média d'un message de protocole d'initiation de session, SIP, associé au dispositif de l'utilisateur final (200).

12. Procédé selon la revendication 11, dans lequel l'extraction des informations de décodage de flux média d'un message SIP comprend l'extraction des informations de décodage de flux média du protocole de description de session, SDP, partie du message.

13. Procédé selon la revendication 11, dans lequel l'extraction des informations de décodage de flux média d'un message SIP comprend l'extraction des informations de décodage de flux média d'un message INVITE.

14. Procédé selon la revendication 11, dans lequel l'extraction des informations de décodage de flux média d'un message SIP comprend l'extraction des informations de décodage de flux média d'un message OK.

15. Procédé selon la revendication 1, comprenant en outre les étapes consistant à :
au niveau d'un serveur proxy (206),
(a) recevoir des informations de signalisation d'appel du dispositif de l'utilisateur final (200) ;
(b) transmettre, du serveur proxy (206) à un serveur d'authentification (208), des informations d'authentification pour le dispositif de l'utilisateur final (200); au niveau du serveur d'authentification (208),
(c) déterminer si le dispositif de l'utilisateur final (200) est sous surveillance en fonction des informations d'authentification;
(d) en réponse à la détermination indiquant que le dispositif de l'utilisateur final (200) est sous surveillance, notifier le serveur proxy (206) avec le premier message selon lequel le dispositif de l'utilisateur final (200) est sous surveillance; et au niveau du serveur proxy (206),
(e) en réponse à la réception du premier message selon lequel le dispositif de l'utilisateur final (200) est sous surveillance, copier les informations de signalisation d'appel associées au dispositif de l'utilisateur final (200).

16. Procédé selon la revendication 15, dans lequel l'étape (c) comprend la détermination indiquant si un dispositif d'un appelé est sous surveillance.

17. Procédé selon la revendication 15, dans lequel l'étape (c) comprend la détermination indiquant si un dispositif d'un appelant est sous surveillance.

18. Procédé selon la revendication 15, comprenant l'étape consistant à :
au niveau du serveur proxy (206),
(f) transmettre une copie des informations de signalisation d'appel à un dispositif d'enregistrement (210).

19. Procédé selon la revendication 18, comprenant les étapes consistant à:
au niveau du serveur proxy (206), réaliser l'extraction des informations d'identification de flux média et transmettre les informations d'identification de flux média au routeur périphérique (212).

20. Procédé selon la revendication 19, comprenant les étapes consistant à :
au niveau du routeur périphérique (212),
(i) identifier un flux média dirigé vers ou transmis depuis le dispositif de l'utilisateur final (200) en fonction des informations d'identification de flux média ; et
(j) copier le flux média.

21. Procédé selon la revendication 20, comprenant l'étape consistant à transmettre une copie du flux média à un dispositif d'enregistrement (210).

22. Procédé selon la revendication 15, dans lequel l'extraction d'informations d'identification de flux média comprend l'extraction d'une adresse et d'un numéro de port de protocole Internet, IP, pour le dispositif de l'utilisateur final (200).

23. Procédé selon la revendication 1, comprenant en outre les étapes consistant à :
au niveau d'un serveur proxy (206) dans un premier réseau géré par un premier fournisseur de services,
(a) recevoir des informations de signalisation d'appel pour un appel à destination ou en provenance du dispositif de l'utilisateur final (200);
(b) transmettre, du serveur proxy (206) à un serveur d'authentification (208), des informations d'authentification pour le dispositif de l'utilisateur final (200); au niveau du serveur d'authentification (208),
(c) déterminer si le dispositif de l'utilisateur final (200) est sous surveillance en fonction des informations d'authentification ;
(d) en réponse à la détermination indiquant que le dispositif de l'utilisateur final (200) est sous surveillance, notifier le serveur proxy (206) que le dispositif de l'utilisateur final (200) est sous surveillance ; au niveau du serveur proxy (206),
(e) en réponse à la réception de la notification selon laquelle le dispositif de l'utilisateur final (200) est sous surveillance, déterminer si des points d'extrémité d'un appel à destination ou en provenance du dispositif de l'utilisateur final (200) se trouvent à l'intérieur du premier réseau ; et
(f) en réponse à la détermination indiquant que les points d'extrémité ne se trouvent pas à l'intérieur du premier réseau, notifier une entité dans un second réseau géré par un second fournisseur de services que le dispositif de l'utilisateur final (200) est sous surveillance.

24. Procédé selon la revendication 23, dans lequel la notification d'une seconde entité comprend la notification d'un serveur proxy (712) dans le second réseau.

25. Procédé selon la revendication 23, dans lequel la notification d'une entité dans un second réseau comprend la notification d'un serveur d'authentification (708) dans le second réseau.

26. Procédé selon la revendication 23, dans lequel la notification d'une entité dans le second réseau comprend la notification d'un serveur de règles (716) dans le second réseau.

27. Système de surveillance d'un réseau à protocole Internet, IP, **caractérisé par** :
(a) un premier serveur ayant une base de données d'utilisateurs sous surveillance (412) contenant des informations indiquant si un dispositif de l'utilisateur final (200) est sous surveillance et un processeur de surveillance (410) pour accéder à la base de données d'utilisateurs sous surveillance (412) afin de déterminer si le dispositif de l'utilisateur final (200) est sous surveillance; et
(b) un second serveur comprenant un contrôleur de session multimédia (310) pour contrôler des sessions de communication multimédia entre l'utilisateur final et d'autre utilisateurs finals et une interface de surveillance (312) pour communiquer avec le premier serveur afin de déterminer si le dispositif de l'utilisateur final est sous surveillance
dans lequel le second serveur est adapté pour extraire des informations d'identification de flux média d'un message de signalisation d'appel et dans lequel le second serveur est en outre adapté pour transmettre les informations d'identification de flux média à un routeur périphérique (212) afin de permettre la copie d'un flux média identifié par les informations d'identification de flux média.

28. Système selon la revendication 27, dans lequel le premier serveur est un serveur d'authentification (208) et le second serveur est un serveur proxy (206).

29. Système selon la revendication 28, dans lequel le serveur proxy (206) comprend un processeur de messages de signalisation d'appel (314) pour transmettre des copies de messages de signalisation d'appel à un dispositif d'enregistrement (210) lorsque le serveur d'authentification (208) indique que le dispositif de l'utilisateur final (200) est sous surveillance.

30. Système selon la revendication 29, dans lequel le processeur de messages de signalisation d'appel (314) est adapté pour extraire les informations d'identification de flux média d'au moins un des messages de signalisation d'appel pour identifier un flux média associé au dispositif de l'utilisateur final (200).

31. Système selon la revendication 29, dans lequel le processeur de messages de signalisation d'appel (314) est adapté pour extraire les informations d'identification de flux média d'au moins un message de protocole d'initiation de session, SIP, associé au dispositifde l'utilisateur final (200).

32. Système selon la revendication 31, dans lequel le processeur de messages de signalisation d'appel (314) est adapté pour extraire les informations d'identification de flux média du protocole de description de session, SDP, d'une portion du message SIP.

33. Système selon la revendication 29, dans lequel le processeur de messages de signalisation d'appel (314) est adapté pour extraire les informations d'identification de flux média d'un message INVITE associé au dispositif de l'utilisateur final (200).

34. Système selon la revendication 29, dans lequel le processeur de messages de signalisation d'appel (314) est adapté pour extraire les informations d'identification de flux média d'un message OK associé au dispositif de l'utilisateur final (200).

35. Système selon la revendication 29, dans lequel le processeur de messages de signalisation d'appel (314) est adapté pour extraire des premières informations d'identification de flux média pour un premier dispositif de l'utilisateur final (700) d'un message INVITE transmis à partir du premier dispositif de l'utilisateur final (700) et pour extraire des secondes informations d'identification de flux média pour un second dispositif d'utilisateur final (702) d'un message OK transmis à partir du second dispositif d'utilisateur final (702).

36. Système selon la revendication 35, dans lequel le premier dispositif de l'utilisateur final (700) est un dispositif de communication IP et le second dispositif d'utilisateur final (702) est un dispositif de communication IP.

37. Système selon la revendication 35, dans lequel le premier dispositif de l'utilisateur final (700) est un dispositif de communication IP et le second dispositif d'utilisateur final (702) est un dispositif de communication par réseau téléphonique public commuté, PSTN.

38. Système selon la revendication 27, dans lequel les informations d'identification de flux média comprennent une adresse et un numéro de port IP pour le dispositif de l'utilisateur final (200).

39. Système selon la revendication 29, dans lequel le processeur de messages de signalisation d'appel (314) est adapté pour extraire des informations de décodage de flux média d'au moins un des messages de signalisation d'appel pour décoder un flux média associé au dispositif de l'utilisateur final (200).

40. Système selon la revendication 29, dans lequel le processeur de messages de signalisation d'appel (314) est adapté pour extraire les informations de décodage de flux média d'au moins un message de protocole d'initiation de session, SIP, associé au dispositif de l'utilisateur final (200).

41. Système selon la revendication 40, dans lequel le processeur de messages de signalisation d'appel (314) est adapté pour extraire les informations de décodage de flux média du protocole de description de session, SDP, d'une portion du message SIP.

42. Système selon la revendication 29, dans lequel le processeur de messages de signalisation d'appel (314) est adapté pour extraire les informations de décodage de flux média d'un message INVITE associé au dispositif de l'utilisateur final (200).

43. Système selon la revendication 29, dans lequel le processeur de messages de signalisation d'appel (314) est adapté pour extraire les informations de décodage de flux média d'un message OK associé au dispositif de l'utilisateur final (200).

44. Système selon la revendication 29, dans lequel le processeur de messages de signalisation d'appel (314) est adapté pour extraire des premières informations de décodage de flux média pour un premier dispositif de l'utilisateur final (700) d'un message INVITE transmis à partir du premier dispositif de l'utilisateur final (700) et pour extraire des secondes informations de décodage de flux média pour un second dispositif de l'utilisateur final (702) d'un message OK transmis à partir du second dispositif de l'utilisateur final (702).

45. Système selon la revendication 44, dans lequel le premier dispositif de l'utilisateur final (700) est un dispositif de communication IP et le second dispositif de l'utilisateur final (702) est un dispositif de communication IP.

46. Système selon la revendication 44, dans lequel le premier dispositif de l'utilisateur final (700) est un dispositif de communication IP et le second dispositif de l'utilisateur final (702) est un dispositif de communication par réseau téléphonique public commuté, PSTN.

47. Produit de programme d'ordinateur comprenant des instructions exécutables par ordinateur incorporé dans un support lisible par ordinateur pour réaliser les étapes consistant à :
(a) recevoir un message de signalisation d'appel par paquets transmis d'un dispositif de l'utilisateur final (200) par l'intermédiaire d'un réseau de communication par paquets ;
(b) extraire des informations d'identification d'utilisateur final du message de signalisation d'appel;
(c) transmettre les informations d'identification d'utilisateur final à un serveur d'authentification (208) afin de déterminer si le dispositif de l'utilisateur final (200) est sous surveillance ; et
(d) en réponse à la réception de la notification selon laquelle le dispositif de l'utilisateur final (200) est sous surveillance, copier les messages de signalisation d'appel associés au dispositif de l'utilisateur final (200).

48. Produit de programme d'ordinateur selon la revendication 47, comprenant, en réponse à la réception de la notification selon laquelle l'utilisateur final est sous surveillance, l'extraction d'informations d'identification de flux média du message de signalisation d'appel.

49. Produit de programme d'ordinateur selon la revendication 48, dans lequel l'extraction d'informations d'identification de flux média comprend l'extraction d'informations d'identification de flux média d'un message de protocole d'initiation de session, SIP.

50. Produit de programme d'ordinateur selon la revendication 49, dans lequel l'extraction d'informations d'identification de flux média comprend l'extraction d'informations d'identification de flux média du protocole de description de session, SDP, d'une portion du message SIP.

51. Produit de programme d'ordinateur selon la revendication 48, dans lequel l'extraction d'informations d'identification de flux média comprend l'extraction d'informations d'identification de flux média d'un message INVITE.

52. Produit de programme d'ordinateur selon la revendication 48, dans lequel l'extraction d'informations d'identification de flux média comprend l'extraction d'informations d'identification de flux média d'un message OK.

53. Produit de programme d'ordinateur selon la revendication 48, dans lequel l'extraction des informations d'identification de flux média comprend l'extraction d'une adresse et d'un numéro de port IP pour le dispositif de l'utilisateur final (200).

54. Produit de programme d'ordinateur selon la revendication 47, comprenant, en réponse à la réception d'une notification selon laquelle le dispositif de l'utilisateur final (200) est sous surveillance, l'extraction d'informations de décodage de flux média d'au moins un des messages de signalisation d'appel pour décoder un flux média associé au dispositif de l'utilisateur final (200).

55. Produit de programme d'ordinateur selon la revendication 54, dans lequel l'extraction des informations de décodage de flux média comprend l'extraction des informations de décodage de flux média d'au moins un message de protocole d'initiation de session, SIP, associé au dispositif de l'utilisateur final (200).

56. Produit de programme d'ordinateur selon la revendication 55, dans lequel l'extraction des informations de décodage de flux média d'au moins un message SIP comprend l'extraction des informations de décodage de flux média du protocole de description de session, SDP, d'une portion du message SIP.

57. Produit de programme d'ordinateur selon la revendication 54, dans lequel l'extraction des informations de décodage de flux média comprend l'extraction des informations de décodage de flux média d'un message INVITE associé au dispositif de l'utilisateur final.

58. Produit de programme d'ordinateur selon la revendication 54, dans lequel l'extraction des informations de décodage de flux média comprend l'extraction des informations de décodage de flux média d'un message OK associé au dispositif de l'utilisateur final.
